# EUROPEAN PATENT APPLICATION

(11) **EP 1 510 785 A1**
(43) Date of publication of application: **02.03.2005**
(21) Application number: 04254890.9
(22) Date of filing: 13.08.2004
(51) Int. Cl.: G01C 21/34

(54) **Navigation information providing apparatus**

(30) Priority: 29.08.2003 JP 2003209789
(71) Applicant: Pioneer Corporation, Tokyo 153-8654 (JP); Increment P Corporation, Tokyo 153-8665 (JP)
(72) Inventor: Hirose, Koji, c/o Increment P Corporation, Tokyo 153-8665 (JP); Suzuki, Nobuaki, c/o Increment P Corporation, Tokyo 153-8665 (JP)
(74) Representative: Haley, Stephen

(57) **Abstract**

In a navigation system according to the present invention, a server (400) acquires current position information, customer specifying information, and service request information from a terminal unit (300) via a network (200). In response to this service request information, the acquired customer specifying information is authenticated by verifying the acquired customer specifying information to customer specifying information including the customer specifying information previously stored and specifying the customer. Further in response to the service request information, the server acquires travel-use information to be used when traveling from a current position based on the current position information, and generates customer-oriented information to be provided to the customer based on the current position information, travel-use information, and map information previously stored. The server processes the customer-oriented information generated for the customer and makes settlement for an information service fee to charge when providing the customer-oriented information previously stored based on customer specifying information corresponding to the authenticated customer identifying information.

## Description

The present invention relates to an information providing apparatus for providing information to a customer in response to a customer's request, a system for the same, a method for the same, a program for the same, and a recording medium with the program recorded therein.

There has been known, for instance, the communication navigation system in which a customer acquires map information, route information concerning a traveling route from a current position to a destination, and information concerning nearest shops by way of communications from a server using a mobile communication terminal such as, for instance, an in-vehicle or portable navigation system, a PDA (Personal Digital Assistant), a mobile telephone, PHS (Personal Handyphone System) or a portable personal computer (Refer to, for instance, Published Japanese translation of an International Application No. 2001-519029).

In the communication navigation system, when retrieving information concerning a route from a current position to a destination, the server acquires current position information concerning the current position and destination information concerning the destination, and searches an optimal traveling route based on the current position information and the destination information. Then the server sends route information concerning the searched traveling route to a terminal unit.

In this communication navigation system, the server acquires traffic information concerning traffic accidents, traffic jams or the like from, for instance, the Vehicle Information Communication System (VICS). When a traffic accident or a traffic jam occurs on the searched route, the server also sends information concerning a roundabout route for avoiding the place of traffic accident or traffic jam.

With the navigation system described in the publication above, however, information indicating availability of a roundabout route for the optimal traveling route is not provided, and for instance, when information concerning a plurality of roundabout routes is provided for avoiding a place of traffic accident or traffic jam, a user can not recognize which roundabout route is the optimal one. Therefore, even when the server can provide information concerning roundabout routes for avoiding a place of traffic accident or traffic jam, it is impossible for each user to acquire effective information, and there is the need for providing information effective for each user.

To solve the problems in the conventional technology as described above, an object of the present invention is to provide an information providing apparatus ensuring the improved convenience for users, a system, a method, a program for the same, and a recording medium with the program recorded therein.

According to a first aspect of the present invention, an information providing apparatus for providing information in response to a request from a customer includes: a service fee information storage that stores service fee information concerning an information service fee to charge when providing the information; a customer specifying information storage that stores customer specifying information for specifying the customer including customer identifying information for identifying the customer; a map information acquiring section for acquiring map information; a positional information acquiring section for acquiring current position information concerning a current position of the customer; a customer identifying information acquiring section for acquiring customer identifying information of the customer; a request information acquiring section for acquiring service request information for requesting provision of the information; an authenticating section for authenticating the customer identifying information by verifying the acquired customer identifying information to the stored customer specifying information in response to the acquired service request information; a customer-oriented information generating section that acquires travel-use information based on the acquired current position information and to be used when traveling from the current position, and generates customer-oriented information to be provided to the customer based on the acquired current position information, map information and the travel-use information in response to the acquired service request information; and an information providing section for processing the generated customer-oriented information so that the information can be provided to the customer, while, based on the customer specifying information corresponding to the authenticated customer identifying information, processing a settlement of an information service fee based on the stored service fee information.

According to a second aspect of the present invention, an information providing system includes: the above-described information providing apparatus; a communication terminal unit owned by a customer and capable of transmitting and receiving information; and a communication section interconnecting the information providing apparatus with the communication terminal unit so that information can be transmitted therebetween.

According to third aspect of the present invention, an information providing method for providing information in response to a request from a customer, includes the steps of: acquiring map information, current position information concerning a current position of the customer, customer identifying information for the customer, and service request information requesting provision of the information; authenticating the customer identifying information by verifying the acquired customer identifying information to customer specifying information for specifying the customer including the customer identifying information previously stored in response to the acquired service request information; acquiring travel-use information to be used when traveling from the current position based on the acquired current position information to generate customer-oriented information to be provided to the customer based on the acquired current position information, map information, and travel-use information in response to the acquired service request information; and processing the generated customer-oriented information so that the information can be provided to the customer while, based on the customer specifying information corresponding to the authenticated customer identifying information, processing a settlement of an information service fee based on previously stored service fee information concerning an information service fee to charge when providing the customer-oriented information.

According to a fourth aspect of the present invention, an information providing program operable in a computer for performing the above-described information providing method.

According to a fifth aspect of the present invention, a recording medium stores the above-described information providing program in a manner readable by a computer.

In the Drawings;
Fig. 1 is a block diagram showing general configuration of a navigation system according to one embodiment of the present invention;
Fig. 2 is a block diagram showing general configuration of a terminal unit in the embodiment described above;
Fig. 3 is a block diagram showing general configuration of a processor of the terminal unit in the embodiment;
Fig. 4 is a block diagram showing general configuration of a server in the embodiment;
Fig. 5 is a block diagram showing general configuration of a processor of the server in the embodiment;
Fig. 6 is a conceptual diagram schematically showing a table structure of data for displaying map information in the embodiment;
Fig. 7 is a conceptual diagram schematically showing a table structure of matching data for map information in the embodiment;
Fig. 8 is a conceptual diagram schematically showing a table structure of data in a traffic jam prediction table in the embodiment;
Fig. 9 is a conceptual diagram schematically showing a table structure of data in a calendar template in the embodiment;
Fig. 10 is a conceptual diagram schematically showing a table structure of data in a customer information table in the embodiment;
Fig. 11 is a conceptual diagram schematically showing a table structure of data in an accounting information table in the embodiment;
Fig. 12 is a conceptual diagram schematically showing a table structure of data in a data table for generation of customer-oriented information in the embodiment;
Fig. 13 is a flowchart showing how to modify a calendar template in the embodiment;
Fig. 14 is a conceptual diagram schematically showing a table structure of data in the calendar template updated by a calendar modifying section;
Fig. 15 is a flowchart showing how to distribute the customer-oriented information in the embodiment;
Fig. 16 is a schematic diagram showing a display screen for the customer-oriented information corresponding to a distributed request level C in the embodiment;
Fig. 17A and Fig. 17B are schematic diagrams each showing a display screen for the customer-oriented information corresponding to a distributed request level B in the embodiment; and
Fig. 18A and Fig. 18C are schematic diagrams each showing a display screen for the customer-oriented information corresponding to a distributed request level A in the embodiment.

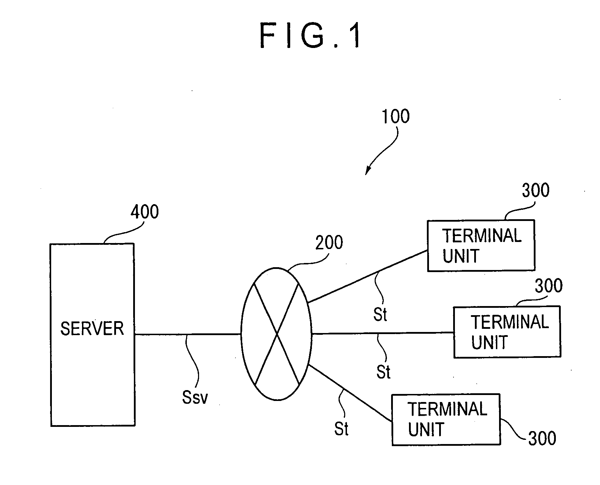

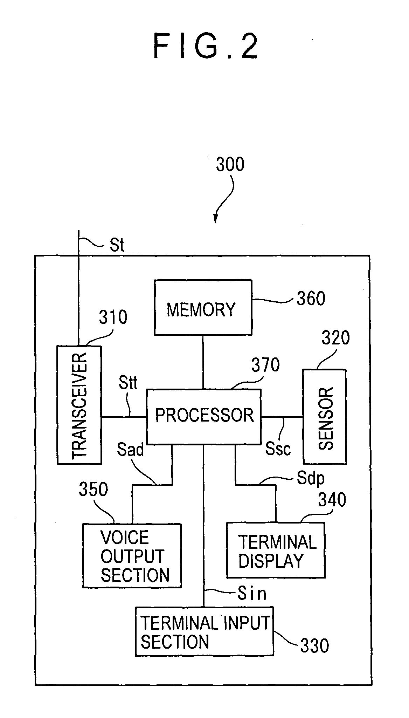

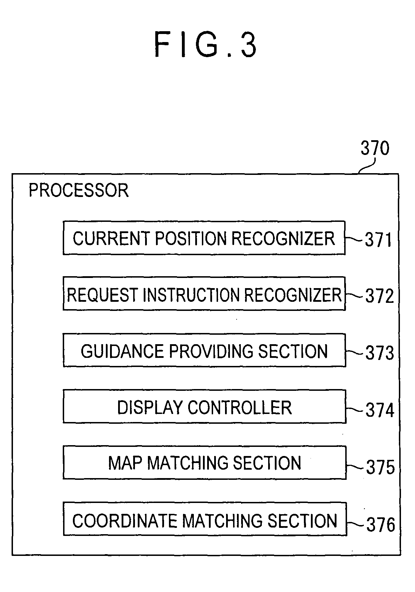

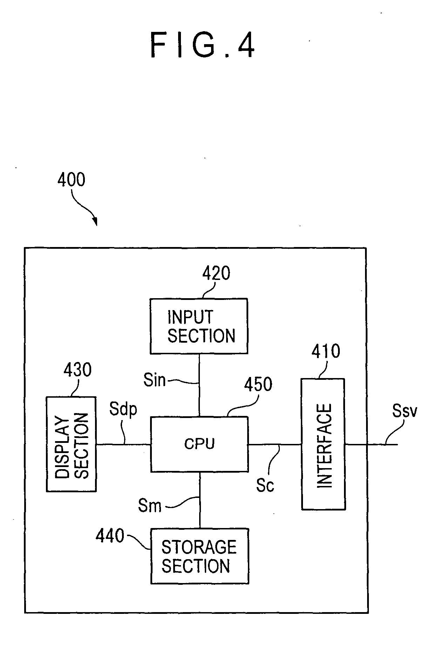

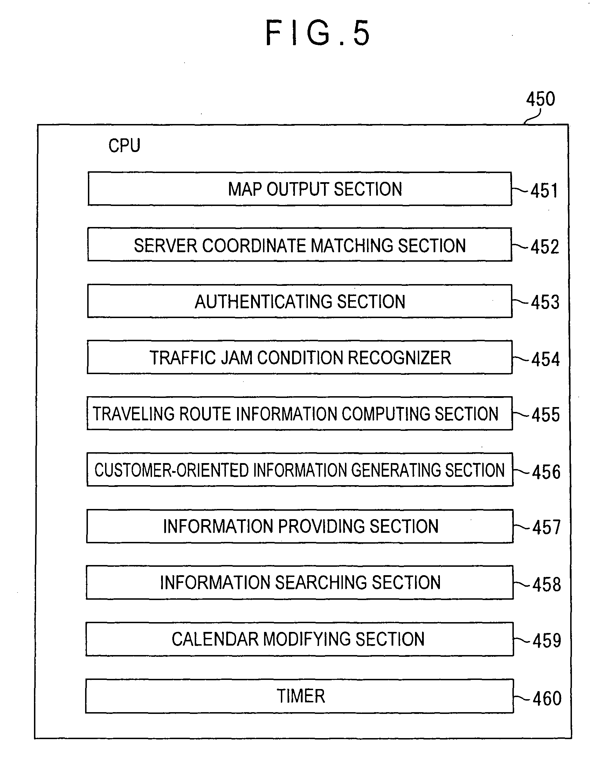

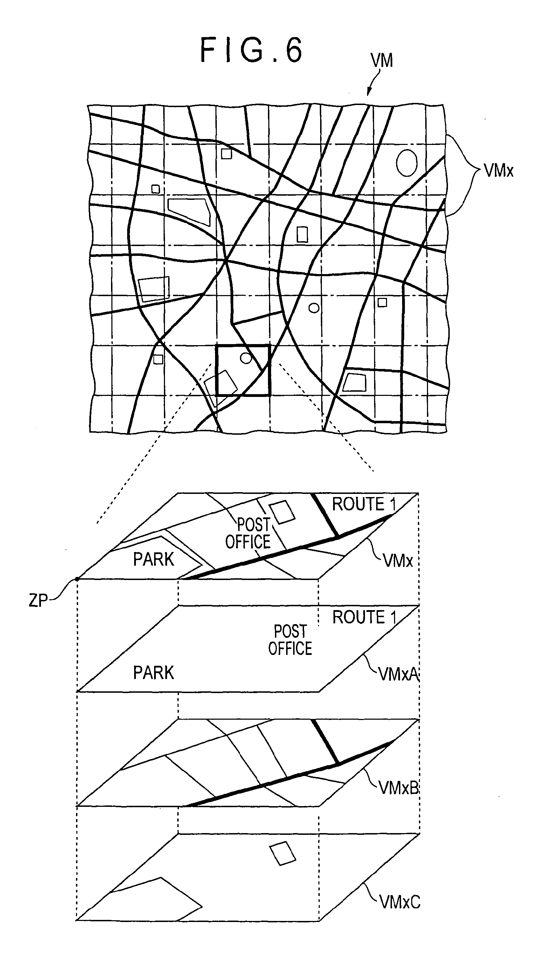

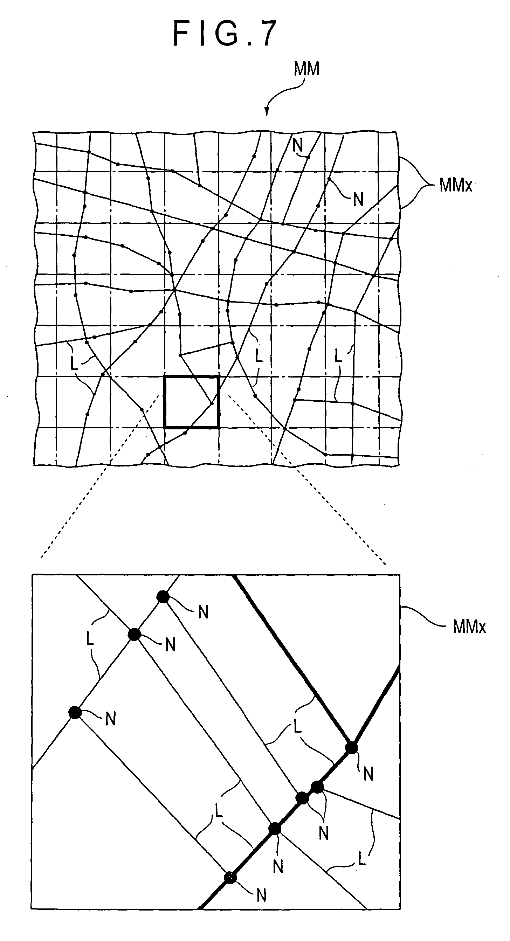

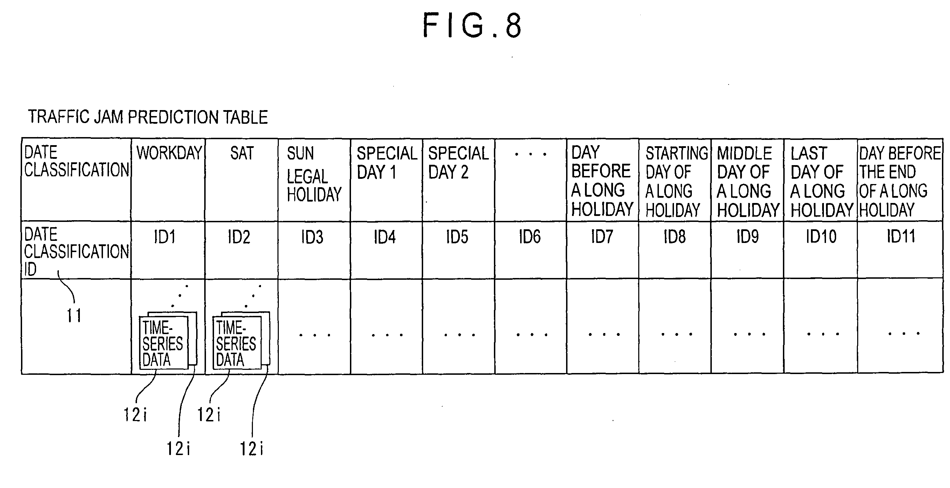

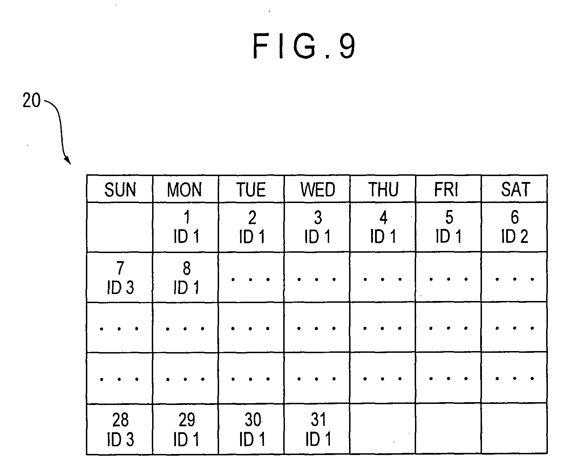

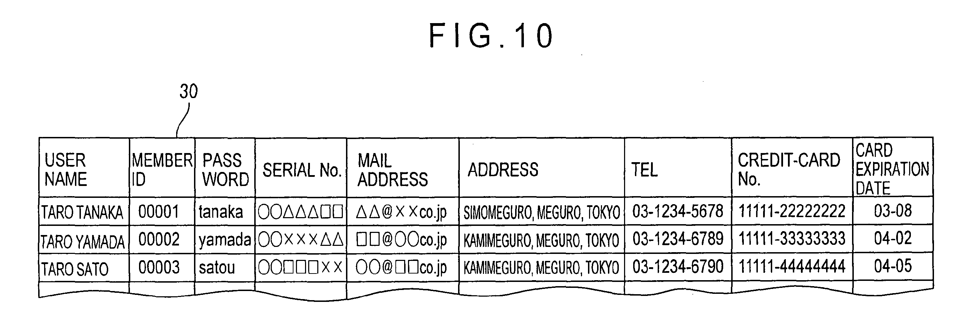

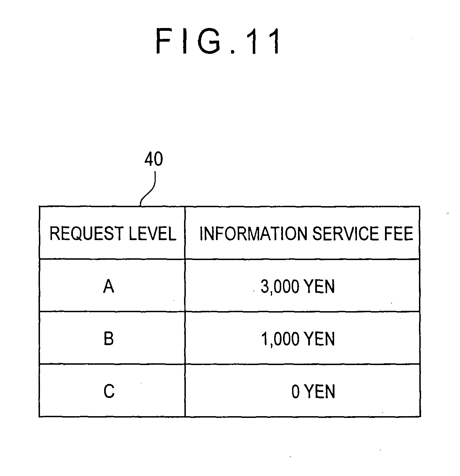

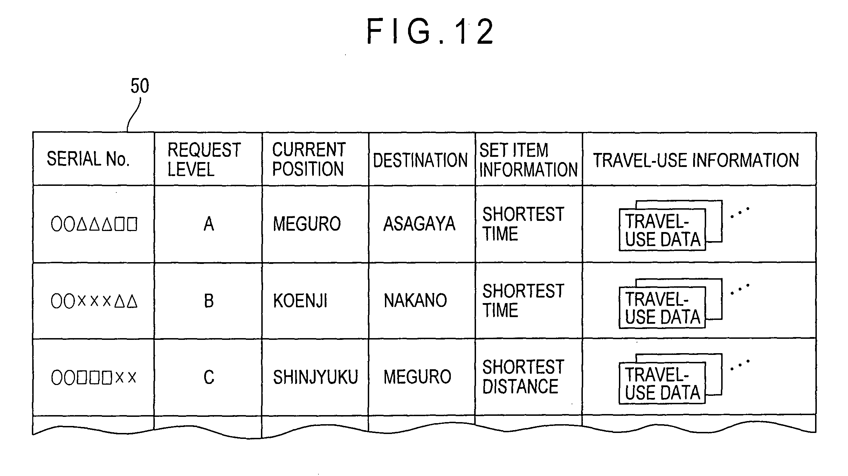

An embodiment of the present invention is described below with reference to the related drawings. In this embodiment, a communication navigation system is described as an example of the information processing system according to the present invention. Fig. 1 is a block diagram showing general configuration of the navigation system according to the embodiment. Fig. 2 is a block diagram showing general configuration of a terminal unit. Fig. 3 is a block diagram showing general configuration of a processor in the terminal unit. Fig. 4 is a block diagram showing general configuration of a server. Fig. 5 is a block diagram showing general configuration of a CPU (Central Processing Unit) of the server. Fig. 6 is a conceptual diagram schematically showing a table structure of data for display constituting map information. Fig. 7 is a conceptual diagram schematically showing a table structure of matching data constituting the map information. Fig. 8 is a conceptual diagram schematically showing a table structure of data in a traffic jam prediction table. Fig. 9 is a conceptual diagram schematically showing a table structure of data in a calendar template. Fig. 10 is a conceptual diagram schematically showing a table structure of data in a customer information table. Fig. 11 is a conceptual diagram schematically showing a table structure of data in an accounting information table. Fig. 12 is a conceptual diagram schematically showing a table structure of data in a data template for generation of customer-oriented information.

### [Configuration of Navigation System]

In Fig. 1, the reference numeral 100 indicates a communication navigation system as an information processing system, and this navigation system 100 provides guidance concerning traveling in response to a traveling condition of a movable body such as a vehicle. The movable body is not limited to a vehicle, and the present invention can be applied to any movable body such as an airplane and a vessel. The navigation system 100 comprises, as shown in Fig. 1, a network 200 as a communication section, a terminal unit 300 as a communication terminal unit, and a server 400 as an information providing device.

Connected to the network 200 are the terminal unit 300 and the server 400. The network 200 connects the terminal unit 300 and the server 400 so that transaction of information can be executed therebetween. Networks to which the present invention is applicable include, for instance, the Internet based on a general purpose protocol such as the TCP/IP, Intranet, LAN (Local Area Network), a network such as a communication line network and a broadcasting network formed by a plurality of base stations each constituting a network enabling information transaction through a radio medium, and aradio medium itself as a medium for direct information transaction between the terminal unit 300 and the server 400. Any media such as electric waves, light, sonic waves, electromagnetic waves, or the like may be used for the radio medium in the present invention.

The terminal unit 300 may be an in-vehicle or portable one as a movable body mounted on, for instance, a vehicle, a PDA (Personal Digital Assistant), a mobile telephone, a PHS (Personal Handyphone System) or a portable personal computer. The terminal unit 300 acquires map information delivered from the server 400 via the network 200 described hereinafter, and searches and displays, based on this map information, information concerning a current position, a destination, and a route to the destination, and also searches and displays information concerning prespecified nearest shops, or contents of services provided at the shops, or the like. The terminal unit 300 comprises, as shown in Fig. 2, a transceiver 310, a sensor 320, a terminal input section 330, a terminal display 340, a voice output section 350, a memory 360 as a terminal storage section, and a processor 370.

The transceiver 310 is connected via the network 200 to the server 400 and is also connected to the processor 370. The transceiver 310 can receive a terminal signal St via the network 200 from the server 400, executes the input interface processing previously set with the acquisition of this terminal signal St, and outputs the signal to the processor 370 as a processing terminal signal Stt. Further the transceiver 310 can receive the processing terminal signal Stt from the processor 370, executes the output interface processing previously set with the acquisition of this inputted processing terminal signal Stt, and sends the signal as a terminal signal St via the network 200 to the server 400.

The sensor 320 detects a traveling condition of a movable body, for instance, a vehicle, namely a current position or a driving state thereof to output the same to the processor 370 as a prespecified signal S_{SC}. The sensor 320 comprises, for instance, a GPS (Global Positioning System) receiver not shown and various sensors such as a speed sensor, an azimuthal angle sensor and an acceleration sensor each not shown.

The GPS receiver receives navigation electric waves outputted from a GPS satellite which is an artificial satellite not shown via a GPS antenna not shown. The GPS receiver computes simulated coordinate values for a current position based on a signal corresponding to the received navigation electric waves, and outputs the simulated coordinate values as GPS data to the processor 370.

The speed sensor, which is one of the sensors constituting the sensor 320, is mounted on a movable body, for instance, a vehicle, and detects a running speed or an actual acceleration of the vehicle based on a signal varying in response to a running speed of the vehicle as a traveling speed thereof. This speed sensor reads a pulse signal or a voltage value outputted in association with rotation of, for instance, a shaft or a wheel. The speed sensor outputs detected information such as the read pulse signal or voltage value to the processor 370. The azimuthal angle sensor, which is one of the sensors constituting the sensor 320, is mounted on a vehicle, has the so-called gyro sensor not shown, detects an azimuthal angle of a vehicle, namely a moving direction of the vehicle, and outputs to the processor 370 a signal as detected information concerning a detected direction in which the vehicle moves. The acceleration sensor, which is one of the sensors constituting the sensor 320, is mounted on a vehicle and detects acceleration in the moving direction of the vehicle. This acceleration sensor converts the detected acceleration to a sensor output value for the detected information acquired by, for instance, a pulse or a voltage, and outputs the sensor output value to the processor 370.

The terminal input section 330 has various types of operation buttons and operation knobs not shown used for input operations with, for instance, a keyboard, a mouth or the like. The operation buttons and operation knobs are used for inputting, for instance, an instruction for operating the terminal unit 300. More specifically, the operation buttons and operation knobs are used, for instance, to input an instruction for execution of a communicating operation for acquiring information via the network 200, or to execute operations for setting contents of the information to be acquired or conditions for acquiring information, for setting a destination, for searching information, for displaying a driving state of a vehicle as a traveling condition thereof, or the like. The terminal input section 330 outputs a prespecified signal Sin according to the necessity to the processor 370 in response to an input operation for setting the specified items. It is to be noted that the configuration of this terminal input section 330 is not limited to that based on the operation buttons and operation knobs as described above, and any configuration, in which various specified items can be set, for instance, by means of an input operation with a touch panel provided on the terminal display 340 or an input operation through voices, may be used.

The terminal display 340 is controlled by the processor 370 and has a signal Sdp of image data from the processor 370 displayed on a screen. The image data includes, for instance, image data such as map information or search information acquired via the network 200 from the server 400 described hereinafter, TV image data received by a TV receiver not shown, image data recorded in a recording medium such as an optical disk, a magnetic disk, a memory card or other external devices and read with a drive or the like, image data from the memory 360, or the like. As the terminal display 340, for instance, liquid crystal panel, an organic EL (Electro Luminescence) panel, a PDP (Plasma Display Panel), or a CRT (Cathode-Ray Tube) may be used.

The voice output section 350 has a voice generating section such as, for instance, a speaker not shown. This voice output section 350 is controlled by the processor 370 and has various signals Sad such as voice data from the processor 370 outputted from the voice generating section. The information outputted through voices includes, for instance, a driving direction or a driving state of a vehicle or a traffic condition, and is provided to a person on board such as a driver for providing guidance to driving of a vehicle. The voice generating section can output, for instance, TV voice data and sound data received with a TV receiver, voice data recorded in a recording medium or the memory 360 or the like according to the necessity. The configuration of the voice output section 350 is not limited to that having the voice generating section, and other configuration making use of a voice generating section mounted on a vehicle may be used.

The memory 360 stores therein various information acquired via the network 200, specified items set in response to an input operation in the terminal input section 330, or other information such as music data and image data in a readable state. The memory 360 also stores therein various types of programs executed on the OS (Operating System) for controlling operations of the entire terminal unit 300. The memory 360 further stores therein customer identifying information for identifying a customer as a user of the navigation system 100 with the terminal unit 300. The customer identifying information includes users' full names, addresses, ID (identification) numbers assigned to each user, passwords and serial numbers of the terminal unit 300. As this memory 360, it is preferable to use a memory having a configuration in which storage is protected even when power suddenly turns off due to, for instance, power failure, such as a CMOS (Complementary Metal-Oxide Semiconductor) memory. The memory 360 may have a drive or driver capable of storing data in a recording medium such as HD (Hard Disk), DVD (Digital Versatile Disk) and an optical disk in a readable manner.

The processor 370 has various types of input/output ports not shown such as, for instance, a communication port to which the transceiver 310 is connected, a GPS receiving port to which the GPS receiving section of the sensor 320 is connected, a sensor port to which each of various sensors in the sensor 320 is connected, a key input port to which the terminal input section 330 is connected, a display control port to which the terminal display 340 is connected, a voice control port to which the voice output section 350 is connected, and a memory port to which the memory 360 is connected. The processor 370 comprises, as shown in Fig. 3, a current position recognizer 371, a request instruction recognizer 372, a guidance providing section 373, a display controller 374, a map matching section 375, a coordinate matching section 376, or the like.

The current position recognizer 371 recognizes a current position of a vehicle. More specifically, the current position recognizer 371 computes a plurality of simulated current positions of the vehicle based on data concerning a velocity of the vehicle outputted from the speed sensor and the azimuthal angle sensor in the sensor 320. Further the current position recognizer 371 recognizes simulated coordinate values for a current position of the vehicle based on the GPS data for the current position outputted from a GPS receiver. Then the current position recognizer 371 computes a current position of the vehicle on map information acquired separately by comparing the simulated current position computed as described above to the recognized current simulated coordinate values to recognize the current position of the vehicle.

Further the current position recognizer 371 determines a slope or a vertical interval of a road on which the vehicle is running based on acceleration data outputted from the acceleration sensor and computes the current simulated position of the vehicle to recognize the current position of the vehicle. Namely, the current position recognizer 371 can accurately recognize a current position of a vehicle even at places including those at a cubic interchange or a highway where different road constructions are overlaid in the vertical direction. Further the current position recognizer 371 can recognize an accurate current position of a vehicle, for instance, by correcting, when running on a mountain path or a slope, a difference between a traveling distance of a vehicle computed by using only velocity data or azimuthal angle data and an actual traveling distance of the vehicle using the detected slope of the road.

The current position recognizer 371 can recognize, in addition to the current position of the vehicle computed as described above, for instance, a starting point as a traffic origin set and inputted in the terminal input section 330 as a simulated current position. Various types of information obtained by the current position recognizer 371 is stored in the memory 360 according to the necessity.

The request instruction recognizer 372 recognizes a request instruction for requesting for distribution of various types of information such as customer-oriented information described below or preset information based on retrieved information described below to the server 400, or a request instruction for requesting modification of the calendar template also described below, for instance, in response to an input operation at the terminal input section 330. When this request instruction recognizer 372 recognizes a request instruction, the request instruction recognizer 372 outputs a signal to the display controller 374 for having an input screen displayed on the terminal display 340 to display the input screen on the terminal display 340 for promoting the customer to input prespecified information. The information required for the customer to input includes, but not limited to information concerning a destination, preset items such as the shortest distance or the shortest time , information concerning a request for retrieval of information, information for modifying the calendar template described below, and request level information concerning a request level for customer-oriented information. As the information concerning a destination to be inputted, various types of information for identifying a place such as coordinate values like an altitude and a longitude, an address, and a telephone number may be used. As the request level information to be inputted, a plurality of request levels may be inputted according to contents of the requested customer-oriented information, and the request level is set to request level C when the requested customer-oriented information includes usual traveling route information concerning an usual traveling route; to request level B when the requested customer-oriented information includes currently congested traveling route information concerning a traveling route reflecting a traffic jam currently occurring; and to request level A when the requested customer-oriented information includes predicted traveling route information concerning a traveling route reflecting a currently occurring traffic jam and a predicted traffic jam. Then the request instruction recognizer 372 stores the destination information concerning a destination, set item information, information concerning a request for search of information to be searched, information requesting for modifying a calendar template, and request level information each inputted as described above in the memory 360 according to the necessity, and sends the various types of information stored in the memory 360 via the transceiver 310 and the network 200 to the server 400 to request distribution or change of specified information.

The guidance providing section 373 provides guidance for traveling of a vehicle such as, for instance, guidance including the contents for assisting driving of the vehicle with image displays on the terminal display 340 or voices generated by the voice output section 350. More specifically, for instance, specific arrows, signs or the like are displayed on the terminal display 340, or voice messages such as "Turn to the right for YY at the XX cross point 700 meters ahead", "You are now off from the specified traveling route", or "Traffic jam ahead" are generated from the voice output section 350.

The display controller 374 controls the terminal display 340 according to the necessity so that various types of information is displayed on the terminal display 340.

The map matching section 375 executes the map matching processing for having the current position recognized by the current position recognizer 371 displayed in the correct state based on map information (described in detail hereinafter) acquired via the network 200 from the server 400. In this map matching processing, the current position information is modified according to the necessity, namely corrected so that a position displayed overlapping on the map in the terminal display 340 will not be off from a road as a constituent of the map displayed on the terminal display 340. The matching data described hereinafter is utilized as the map information used in this map matching processing.

The coordinate matching section 376 executes the coordinate matching processing to determine whether point information concerning a node N in matching data MM for the map information (described hereinafter) acquired via the network 200 from the server 400 is identical or not. Namely the coordinate matching section 376 acquires point information for the node N in the matching data MM and reads coordinate information constituting the point information. More specifically, the coordinate matching section 376 computes coordinate values such as a latitude and a longitude based on information for coordinate values or an offset rate in the coordinate information, and when different nodes N have the same coordinate values, the coordinate matching section 376 reads flag information constituting the point information for the nodes N to determine whether the nodes N indicate an identical point or not. When it is determined that the nodes N indicate an identical point, the coordinate matching section 376 determines that the point indicates, for instance, a road condition where links L included in information for different link array blocks linking to the node N respectively cross each other, namely an intersection. When it is determined that the nodes N do not indicate an identical point, the coordinate matching section 376 determines that the point indicates, for instance, a road condition where links L included in information for different link array blocks linking to the node N respectively do not cross each other, namely an elevated road that lies over another road .

The server 400 can sent and receive information to and from the terminal unit 300 via the network 200. Further the server 400 can acquire various types of information via the network 200 from servers (not shown) installed in various institutions including various governmental organizations and institution such as Meteorological Agency, Metropolitan Police Department, private organizations, the Vehicle Information and Communication System (VICS), and business organizations. The acquired information include, for instance, weather information, VICS data as traffic information concerning traffic jams, traffic accidents, construction works, and traffic regulations, and shop information concerning various shops such as gasoline stations and restaurants. The serve 400 comprises, as shown in Fig. 4, an interface 410, an input section 420, a display section 430, a storage section 440, and a CPU 450.

The interface 410 executes the input interface processing previously set to a server signal Ssv inputted via the network 200, and outputs the signal as a processing server signal Sc to the CPU 450. When the processing server signal Sc to be transmitted from the CPU 450 to the terminal unit 300 is inputted, the interface 410 executes the output interface processing previously set to the input processing server signal Sc, and outputs the signal as the server signal Ssv to the terminal unit 300 via the network 200. It is also possible to output the server signal Ssv only to a specified terminal unit 300, if required, based on the information described in the processing server signal Sc. The interface 410 comprises a customer identifying information acquiring section, a positional information acquiring section, and a request information acquiring section each according to the present invention.

The input section 420 has, like the terminal input section 330, various types of operation buttons or operation knobs (not shown) operated for input with, for instance, a keyboard or a mouse. These operation buttons and operation knobs are operated to set contents of operations of the server 400, to set information to be stored in the storage section 440, to update the information stored in the storage section, and to set and input other items. In response to an operation for setting any specific item, the input section 420 outputs a signal Sin corresponding to the set item to the CPU 450 according to the necessity to set and input therein. The configuration for input operations is not limited to use of the operation buttons or the like, and also the configuration is allowable in which various items are set and inputted, for instance, by operating a touch panel provided in the display section 430, or with voices.

The display section 430 is, like the terminal unit 300, controlled by the CPU 450, and displays a signal Sdp for image data from the CPU 450 on a screen thereof. The image data displayed thereon includes, for instance, image data from the storage section 440, or those acquired from any external server via the network 200.

The storage section 440 stores therein in the readable state various types of information received from the terminal unit 300 or any external server such as map information as shown in Fig. 6 and Fig. 7, a traffic jam prediction table 10 as shown in Fig. 8, a calendar template 20 as shown in Fig. 9, a customer information table 30 as shown in Fig. 10, an accounting information table 40 as shown in Fig. 11, and a data table 50 for generation of customer-oriented information as shown in Fig. 12. The storage section 440 has a drive or a driver (not shown) for storing information in a storage medium (not shown) for storing information therein so that the information can be read out from the storage medium. The information stored therein includes also information inputted in response to, for instance, an input operation at the input section 420, and contents of the information inputted therein can be updated from time to time according to the necessity. Also various types of programs executed on an OS for controlling operations of the server 400 as a whole and the entire navigation system 100 are also stored as information in the storage section 440.

The map information include, but not limited to, for instance, data VM for display which is the so-called POI (Point Of Interest), the matching data MM as shown in Fig. 7, and map data for searching a traveling route.

The data VM for display includes, for instance, a plurality of mesh information VMx each having a specific number assigned thereto. Namely the data VM for display is divided to a plurality of mesh information VMx for display for an area, and the plurality of mesh information VMx for display are displayed consecutively in the vertical direction as well as in the horizontal direction. The mesh information VMx for display may further be divided to a plurality of mesh information VMx for display at a lower level for an area, if required. Each mesh information VMx for display is divided to rectangular forms having a prespecified edge length obtained by scaling an actual geographical length according to the scale of the map, and information concerning absolute coordinates ZP in the entire map information, for instance, a map of the entire globe, are assigned to specific comer sections.

The mesh information VMx for display comprises name information VMxA concerning a name of an intersection, road information VMxB, and background information VMxC. The name information VMxA comprises data for names of interchanges or places, which are other elemental data in the area, or the like organized as data allocated and displayed at specified positions in positional relation to the absolute coordinates ZP with the table structure. The road information VMxB comprises data for roads, which is road element data in the area, organized as data allocated and displayed at specified positions in positional relation to the absolute coordinates ZP with the table structure. The background information VMxC comprises data for marks indicating famous places or buildings as other element data or for image information indicating the famous places or buildings also as other element data organized as data allocated and displayed at specified positions in positional relation to the absolute coordinates ZP with the table structure.

On the other hand, the matching data MM is divided, like the data VM for display, into a plurality of matching mesh information MMx for areas with specific numbers assigned thereto respectively and organized consecutively in the vertical direction as well as in the horizontal direction. The matching mesh information MMx may further be divided to a plurality of matching mesh information MMx for an area at a lower level, if required. Each matching mesh information MMx is divided to a plurality of rectangular forms each having a specified edge length obtained by scaling the actual geographical length according to a scale of the map, and has information for absolute coordinates ZP in the entire map information such as, for instance, a map of the globe assigned to specified comer sections respectively. The matching mesh information MMx may be based on a data structure indicating a different area from that indicated by the mesh information VMx for display, namely a scale of each divided area may be different. When the scale is identical, data can be associated with each other using information for numbers specific to specified areas respectively, and when the scale is different, the data may be associated with each other using, for instance, the absolute coordinate values.

The matching data MM is used for the matching processing, for instance, when information concerning a traveling condition of a vehicle is superimposed on the map information to adjust the display so that a display indicating the vehicle is positioned on a road for the purpose to prevent an erroneous display in which a display for the vehicle is present not on a road but on a building. This matching data MM includes information for a plurality of link array blocks.

The link array block information is data with a table structure for a plurality of links L, which are strings linking nodes each constituting a road and indicating a point and are associated with each other with specific regularities. More specifically, the data is a array of links linked to each other successively along a broken line to indicate a preset length of a road such as Koshu Street or the Oume Street, and the links are associated with each other. The link L has string-specific information indicating a specific number assigned to the link L and node information for specific numbers indicating two nodes linked to each other by the link L.

The node N corresponds to a knotting point such as an intersection of roads, a turning point, a branching point or a joining point. The information concerning the node N includes point-specific information indicating a specific number assigned to each node N in the link array block information, coordinate information indicating a position at which each node N is present, and flag information which is branch information indicating whether an indicated point is a branch position, at which a plurality of links intersect each other, such as an intersection or a branch point. Among the nodes N, some have only point-specific information not having flag information and indicating only a form of a road and coordinate information, and other ones further include attribute information which is information indicating a construction of a road such as a tunnel or a width of a road. The node N not having the flag information and indicating only a form of a road is not used for determining identity of a position by the coordinate matching section 376 and a server coordinate matching section described hereinafter.

Further associated with the link array block information in the matching data MM is information concerning a construction of a road such as, for instance, a number of lanes, information indicating whether the road is a main road or not, a national road or a prefectural road, whether the road is a toll road or not, or whether the road is a tunnel or not. With the information concerning a construction of a road, it is possible to display a road as map information in correspondence to the data VM for display.

The map information for searching a traveling route has the same table structure as that of the matching data MM, namely a table structure in which the point information indicating a point like the node N indicating a road and the string information concerning a string connecting a point to another point such as the link L are combined with each other, and the information indicates a road searched as a traveling route.

It is to be understood that the storage section 440 comprises a service fee information storage and a customer identifying information storage.

The traffic jam prediction table 10 is statistic traffic information prepared by statistically processing traffic conditions in the past with a time element, and is a group of data indicating traffic conditions at a given point in the past. This traffic jam prediction table 10 is used for prediction of a traffic condition in the route search processing or in the processing for displaying a map. The traffic jam prediction table 10 has a table structure in which, as shown, for instance, in Fig. 8, a plurality of data classification ID 11 and a plurality of time-series data 12i (i: natural number) are recorded as one record therein.

The data classification ID 11 indicates, for instance, an ID number indicating a classification of dates and days of a week. The classification of dates or days of a week are generically described as date classification and described in detail below. Specifically, "ID1" indicates any of week days from Monday to Friday which is not a national holiday, "ID2" indicates Saturday which is not a national holiday, "ID4" indicates a "special day 1" on which a festival is held in City A, "ID5" indicates a "special day 2" on which a sport game is held in Sport stadium B, "ID7" indicates a "day before a long holiday" such as, for instance, a day before a holiday of four consecutive days, and "ID11" indicates a "day before the end of a long holiday" such as the third day in a holiday of four consecutive days. The date classification ID 11 is not always limited to the ID number and may be text data directly describing a date such as "week day" or the like.

The time-series data 12i indicates a trend in traffic conditions in the past prepared by accumulating data acquired via the network 200 from, for instance, the VICS and subjecting the data to, for instance, statistic processing. Namely the time-series data 12i indicates, a traffic jam condition at a given place monitored at a prespecified point of time such as a length of the traffic jam, time required for escaping from the site of traffic jam, or the like. Although the description above concerning the time-series data 12i assumes a case in which the time-series data 12i is prepared by statistically processing data concerning traffic jams at a specified position with a time element, but the configuration is not limited to this case, and the time-series data 12i may be prepared for each facility, each store, each area, each municipality, and each road.

The calendar template 20 is a template indicating a date classification of each date. More specifically, the calendar template has a table structure in which a plurality of date information each concerning a date, a plurality of classification ID numbers associated with the dates indicated by the date information, and for instance, table data for each of 12 months in a year are recorded therein as one record.

The classification ID number is an ID number which is the same as either one of the date classifications ID 11 in the traffic jam prediction table 10, and indicates a date classification for a date specified by the date information. For instance, Friday on the fifth day of a month has a date classification of "week day" associated with "ID1", and Monday on the 15^{th} of a month has a date classification of "holiday" associated with "ID3". The classification ID number in this calendar template 20 may be changed from time to time according to the necessity by the CPU 450. A data structure of the classification ID number is not limited to a numerical value, and text data corresponding to the date classification ID in the traffic jam prediction table 10 may be used as the classification ID number.

The customer information table 30 is a group of data concerning customers using the navigation system 1. The customer information table 30 comprises a data table having a plurality of customer identifying information for each customer, and is used, for instance, to make settlement, after customer-oriented information described hereinafter is distributed to a customer, for charging the information service fee corresponding to the distributed customer-oriented information. The customer identifying information comprises, as shown in Fig. 10, a customer's name, a member ID, a password, a serial number of the terminal unit 300, an E-mail address, and an address, a telephone number, a credit-card number, and an expiration date for the credit-card. For instance, the customer information table 30 is generated by acquiring the customer identifying information set and inputted in response to an input operation by a customer hoping registration at the terminal unit 300 with the server 400 via the network 200 and processing the acquired customer identifying information for each customer with the CPU 450.

The accounting information table 40 is a group of data constituting the service fee information concerning an information service fee corresponding to the customer-oriented information described hereinafter. This accounting information table 40 is used, like the customer information table 30, for making settlement to charge the information service fee corresponding to the distributed customer-oriented information described hereinafter. More specifically, this accounting information table 40 is a data table for an information service fee set in correspondence to a request level of the customer-oriented information, and has a data structure, as shown in Fig. 11, in which "3000 yen", "1000 yen", and "0 yen" are set in correspondence to the request levels A to C.

The data table 50 for generation of customer-oriented information comprises information used when the customer-oriented information described hereinafter is generated, and has a table structure in which a plurality of service request information requesting distribution of customer-oriented information distributed from the terminal unit 300 to the network 200 and a plurality of travel-use information prepared by generated in correspondence to the service request information for each customer are recorded. More specifically, the service request information includes, as shown in Fig. 12, a serial number of the terminal unit 300 as customer identifying information, request level information, current position information, destination information, and set item information or the like. Further the travel-use information is used when traveling from a current position, and comprises a plurality of data for traveling corresponding to request levels indicated by the request level information. More specifically the travel-use information comprises, for instance, traveling route information concerning a traveling route from a current position based on the current position information to a destination based on the destination information, traveling time information required for traveling on the traveling route based on the traveling route information, traveling distance information concerning a traveling distance of the traveling route, traffic information concerning a traffic condition, and travel-use data such as weather information concerning weather conditions.

Stored in the storage section 440 is search information for acquiring, for instance, information for specified information in the map information. Namely the search information includes various data concerning, for instance, names of areas by and by subdivided such as municipalities, area names, point names, and contents of guidance, and has a table structure based on the tree structure in which such items are associated and stored in a hierarchical format.

The CPU 450 comprises a map output section 451, a server coordinate matching section 452, an authenticating section 453, a traffic jam condition recognizer 454, a traveling route information computing section 455, a customer-oriented information generating section 456, an information providing section 457, an information searching section 458, a calendar modifying section 459, and a timer 460.

The map output section 451 searches, based on an input processing server signal Sc, and according to information requesting distribution of information concerning the map information described in this processing server Sc, requested information of the map information stored in the storage section 440, for instance, data VM for display or matching data MM corresponding to a prespecified area, and outputs the data as a memory signal Sm. Then, the read-out memory signal Sm is converted as the processing server signal Sc according to the necessity, and outputs the memory signal Sm based on the processing server signal Sc via the interface 410 and the network 200 to specified or all terminal units 300 to distribute the requested information of the map information.

The server coordinate matching section 452 executes, like the coordinate matching section 376 in the terminal unit 300 described above, the coordinate matching processing to determine whether the point information, which is information concerning the node N in the matching data MM for the map information, is an identical point or not.

The authenticating section 453 authenticates, based on the input processing server signal Sc, and according to information requesting distribution of the customer-oriented information described in this processing server signal Sc or the like, the terminal unit 300 to which the customer-oriented information is delivered. More specifically, the authenticating section 453 verifies, in response to the request level information included in the data table 50 for generation of customer-oriented information in the storage section 440, a serial number of the terminal unit 300 as the customer identifying information associated with this request level information to the customer specifying information included in the customer information table 30 stored in the storage section 440 to authenticate the customer identifying information (a serial number of the terminal unit 300) acquired from the terminal unit 300. For instance, when the request level as the request level information is "A" or "B", the authenticating section 453 executes the authentication processing for the acquired customer identifying information, and when the request level is "C", the authenticating section does not execute the authentication processing for the acquired customer identifying information.

The traffic jam condition recognizer 454 acquires, based on the input processing server signal Sc, and according to the information request distribution of the customer-oriented information described in this processing server signal Sc, the VICS data via the network 200 from the VICS, and generates the current traffic jam information as traffic jam condition information as the acquired VICS data.

The acquired VICS data has a table structure in which, for instance, a plurality of conceptual items as described below are organized as one set of data:
* Degree of traffic jam condition: Jam, congestion, smooth, etc
* Information concerning a header position of a traffic jam
* Information concerning a length of a traffic jam
* Link travel time information: A period of time for a vehicle to travel between intersections each as the so-called VICS link
* Inter-zone travel time information: A period of time for a vehicle to travel between specified zones each longer than the VICS link
* Information concerning contents of restrictions, causes, and restricted zones
* Information concerning availability of a parking space
* Information concerning availability of a service area or a parking area
* Other types of information

More specifically, the traffic jam condition recognizer 454 generates current traffic jam information in response to the request level information included in the data table 50 for generation of customer-oriented information acquired via the network 200 from the terminal unit 300 and stored in the storage section 440.

For instance, when the request level indicated by the request level information is
"A" or "B", the traffic jam condition recognizer 454 acquired VICS data from the VICS, and generates, based on the acquired VICS data, current traffic jam information concerning, for instance, an area including a current position based on the current position information associated with request level information and a destination based on destination information, or conditions of traffic jams currently occurring in a specified area around the current position. The current traffic jam information generated as described above is associated with the request level information, and is stored as travel-use information in the data table 50 for generation of customer-oriented information in the storage section 440.

When the request level is "A", the traffic jam condition recognizer 454 computes an estimated arrival time concerning an estimated time to arrive at a given place as the destination based on the destination information included in the data table 50 for generation of customer-oriented information. Based on the estimated arrival time and the time-series data 12i included in the traffic jam prediction table 10 or the like, the traffic jam condition recognizer 454 generates traffic jam prediction information as traffic jam condition information concerning prediction of a traffic jam which will occur at a given place before reaching the destination.

More specifically, the traffic jam condition recognizer 454 recognizes a classification ID number for a date on which prediction of a traffic jam is to be executed based on time information acquired from the timer 460 and the calendar template 20. Then the traffic jam condition recognizer 454 searches and acquires the time-series data 12i corresponding to the recognized classification ID number for an area including a current position and a destination based on the current position information and the destination information in the data table 50 for generation of customer-oriented information from the traffic jam prediction table 10. Then the traffic jam condition recognizer 454 obtains estimated arrival time required to arrive at a given place on a traveling route based on traveling route information computed by the traveling route information computing section 455 described hereinafter based on the current traffic jam information stored as travel-use information in the data table 50 for generation of customer-oriented information in the storage section and current time information acquired from the timer 460.

As a method for computing the estimated arrival time, for instance, the following method can be enlisted. To be specific, the estimated arrival time is obtained by recognizing a distance to a given place on the traveling route from the traveling route information, and computing the time required for traveling over this recognized distance based on the current traffic jam information. Then the time of arrival is obtained based on the required time obtained as described above and the current time. Then traffic jam prediction information is generated based on the time-series data 12i and the estimated arrival time. The traffic jam prediction information generated as described above is associated with the request level information and is stored as travel-use information in the data table 50 for generation of customer-oriented information in the storage section 440.

The traveling route information computing section 455 execute route search to a destination requested by a customer based on the input processing server signal Sc and according to the information requesting distribution of the customer-oriented information described in the processing server signal Sc or the like. More specifically, the traveling route information computing section 455 executes route search by computing a driving route for a vehicle in response to the request level information included in the data table 50 for generation of customer-oriented information in the storage section 440, and based on various types of information such as current position information, destination information, and set item information each associated with the request level information as well as on the map information stored in the storage section 440.

For instance, when the request level is "C", the traveling route information computing section 455 searches a road, on which a vehicle can travel, based on the current position information, destination information, and set item information included in the data table 50 for generation of customer-oriented information and by using the traveling route search map information in the map information, and computes a route requiring s shorter period of time for traveling thereon, or usual traveling route information with a short traveling route or the like set therein. Further the traveling route information computing section 455 obtains a period of time required for traveling up to the destination on the route indicated by this usual traveling route information, and computes usual traveling time information concerning the traveling time. Then the usual traveling route information and usual traveling time information computed as described above are associated with the request level information, and are stored as travel-use information in the data table 50 for generation of customer-oriented information in the storage section 440 respectively.

When the request level is "B", the traveling route information computing section 455 computes the usual traveling route information described above. Further the traveling route information computing section 455 computes also currently congesting traveling route information concerning a traveling route evading a traffic jam currently occurring based on the current position information, destination information, set item information included in the data table 50 for generation of customer-oriented information as well as on the current traffic jam information stored as travel-use data in the data table 50 for generation of customer-oriented information, and by using the traveling route search map information in the map information. Further, the traveling route information computing section 455 also computes traveling time required for reaching the destination on the route indicated by the computed usual traveling route information and that indicated by the current traffic jam traveling route information respectively based on the current traffic jam information and by taking into account information concerning a currently occurring traffic jam, and also computes the currently congested route traveling time information concerning the traveling times respectively. The usual traveling route information, currently congested traveling route information, and currently congested traveling route traveling time information are associated with the request level information and are stored as the travel-use data in the data table 50 for generation of customer-oriented information in the storage section 440 respectively.

Further, when the request level is "A", the traveling route information computing section 455 computes the usual traveling route information described above and the currently congested traveling route information also described above. The traveling route information computing section 455 also generates traffic jam prediction traveling route information concerning a traveling route evading a traffic jam currently occurring and a predicted traffic jam based on the current position information, destination information, set item information included in the data table 50 for generation of customer-oriented information as well as on the current traffic jam information and traffic jam prediction information stored as travel-use data in the data table 50 for generation of customer-oriented information and by using the traveling route search map information in the map information. Further the traveling route information computing section 455 computes, based on the current traffic jam information and the traffic jam prediction information, traveling time required for traveling to the destination through routes indicated by the usual traveling route information, currently congested traveling route information, and traffic jam prediction traveling route information each computed as described above, and generates the traffic jam prediction traveling time information concerning the traveling times respectively. The generated usual traveling route information, currently congested traveling route information, traffic jam prediction traveling route information, and traffic jam prediction traveling time information are associated with the request level information respectively, and are stored as travel-use data in the data table 50 for generation of customer-oriented information in the storage section 440 respectively.

It is to be noted that sometimes the matching data MM for map information may be used, in addition to the map information for traveling route search, when the traveling route information is generated. For instance, the matching data MM for matching data is used when a traveling route is searched by making use of a road with a narrow width such as a back road not indicated by the map information for traveling route search. When the matching data MM is used, route search is performed according to the necessity based on a result of determination of a road condition by the server coordinate matching section 452. The traveling route information also includes, for instance, route guidance information for assisting driving of a vehicle by providing guidance to the vehicle. This traveling route guidance information is displayed on the terminal display 340 or outputted with voices from the voice output section 350 for assisting driving of the vehicle according to the necessity by control of the guidance providing section 373 in the terminal unit 300 when the traveling route information is transmitted via the network 200 to the terminal unit 300.

The customer-oriented information generating section 456 generates customer-oriented information to be provided to a customer based on an input processing server signal Sc, and according to the information requesting distribution of customer-oriented information described in the processing server signal Sc or the like. More specifically, the customer-oriented information generating section 456 generates customer-oriented information by associating the map information stored in the storage section 440, as well as the current position information, destination information, and travel-use information stored in the data table 50 for generation of customer-oriented information and associated with the request level information.

The information providing section 457 converts the customer-oriented information generated by the customer-oriented information generating section 456 to a processing server signal Sc according to the necessity, outputs the customer-oriented information based on the processing server signal Sc via the interface 410 and the network 200 to a specified terminal unit 300 to distribute the customer-oriented information. When customer-oriented information corresponding to the request level A or request level B is distributed, the information providing section 457 makes settlement for charging an information service fee corresponding to the distributed customer-oriented information based on the customer specifying information stored in the customer information table 30 corresponding to the customer identifying information authenticated by the authenticating section 453 and accounting information table 40.

The information searching section 458 searches, based on the input processing server signal Sc, and according to information requesting search of search information described in this processing server signal Sc, the search information stored in the storage section 440, for instance, based on the item information in the hierarchical state, and reads out the information as a memory signal Sm. The information searching section 458 converts the memory signal Sm read out as described above to a processing server signal Sc, outputs the signal based on the processing server signal Sc via the interface 410 and the network 200 to the specific terminal unit 300 to distribute the search information.

The calendar modifying section 459 recognizes, based on the input processing server signal Sc, information requesting modification of the calendar template 20 described in this processing server signal Sc and customer identifying information such as a serial number or the like for the terminal unit 300 which transmitted the information. Then the information searching section 458 modifies the calendar template 20 stored in the storage section 440 associated with the terminal unit 300 specified by the customer identifying information based on the customer specifying information in the customer information table 30 stored in the storage section 440 according to the necessity. More specifically, the calendar modifying section 459 recognizes, for instance, date information specifying a date, event information concerning events such as festivals or sports games as information requesting modification of the calendar template 20. The calendar modifying section 459 recognizes a date specified by the date information, and also recognizes a classification ID number associated with the event information.

As a way of recognizing the classification ID number, for instance, the following way can be enlisted. Namely the way can be enlisted in which a date classification is determined from the event information and a classification ID number is recognized from the date classification determined as described above. For instance, when the event information concerns a sports game held in a stadium B, the date classification is determined as "special day 2", and the classification ID number is recognized as "ID5" from the "special day 2". When the event information concerns a last day of a holiday consisting of 5 consecutive days, the date classification is recognized as "a final date of a long holiday", and the classification number is recognized as "ID 10" from this "long holiday last day". Then the calendar template 20 is modified according to the necessity based on the date and classification ID number is recognized as described above.

The timer 460 recognizes a current time based on a reference pulse such as, for instance, an internal clock. The timer 460 outputs time information concerning the recognized current time according to the necessity.

The CPU 450 computes with the contents corresponding to an input operation according to the necessity, and generates a signal Sdp or the like based on a signal Sin inputted from the input section 420 in response to an input operation in the input section 420. The CPU 450 outputs various types of signals generated as described above to the display section 430, interface 410, and storage section 440 and makes the signals operate according to the necessity to have the input contents executed.

### [Operations of the Navigation System]

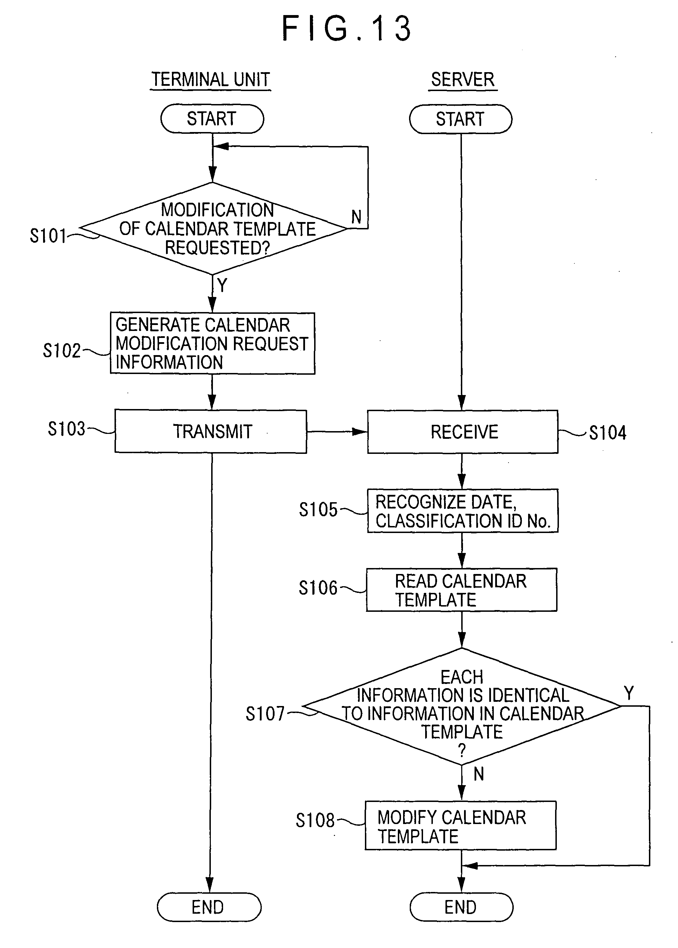

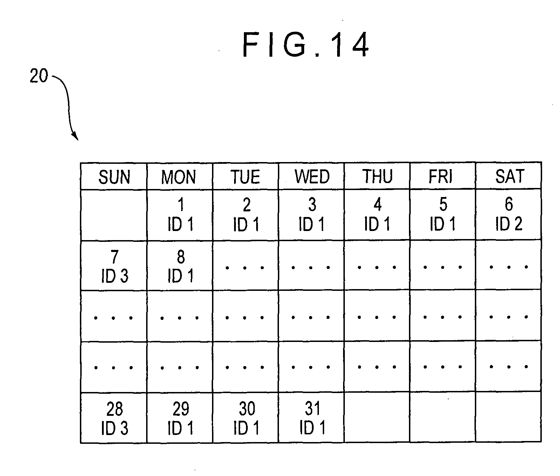

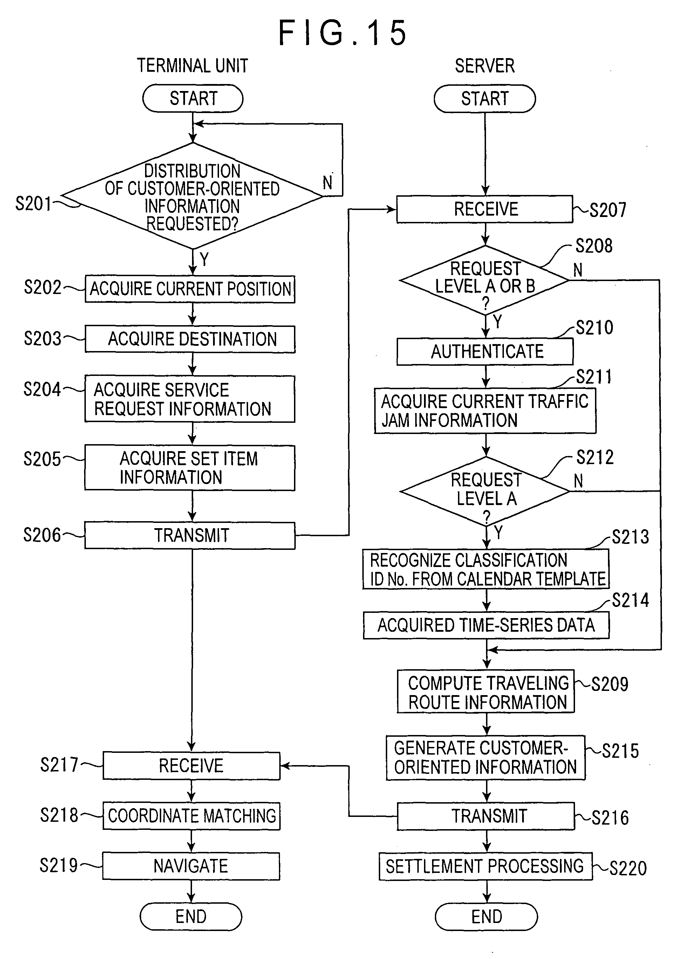

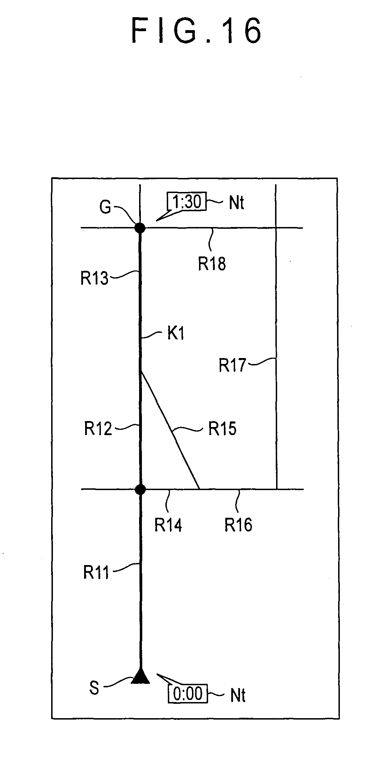

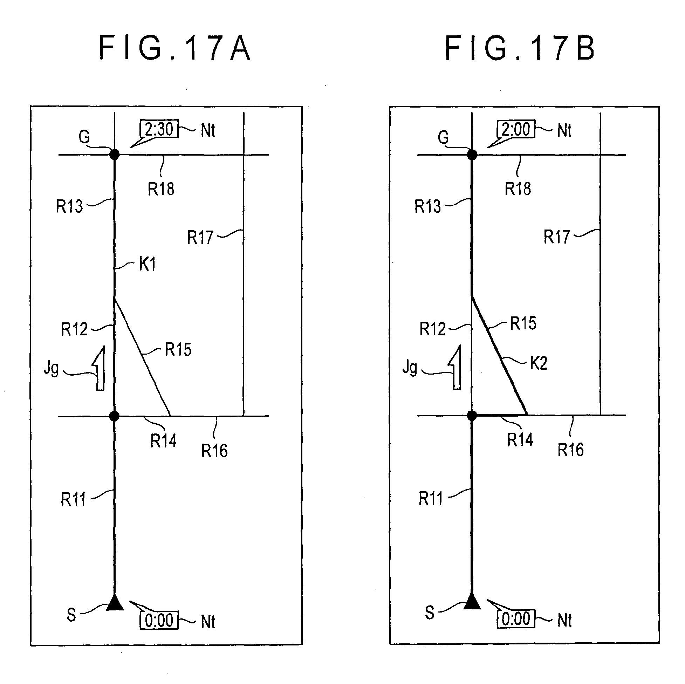

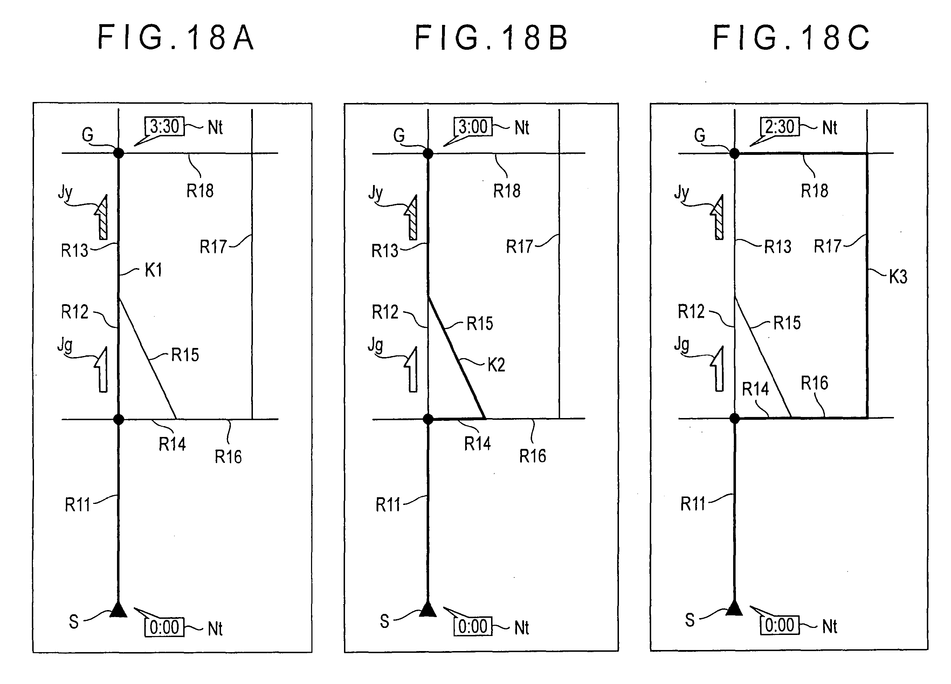

Next, operations of the navigation system 100 are described with reference to Fig. 13 through Fig. 18C. Fig. 13 is a flowchart showing how to modify the calendar template. Fig. 14 is a conceptual view schematically showing a table structure of data in the calendar template updated by the calendar modifying section. Fig. 15 is a flowchart showing how to distribute customer-oriented information. Fig. 16 through Fig. 18C are views each schematically showing a display screen for the distributed customer-oriented information. Fig. 16 is a display screen for customer-oriented information corresponding to the request level C. Fig. 17A and Fig. 17B are views each showing a display screen for customer-oriented information corresponding to the request level B. Fig. 18A through Fig. 18C are views each showing a display screen for customer-oriented information corresponding to the request level A.

### (Processing for modifying calendar template)

As operations of the navigation system 100, at first the processing for modifying the calendar template 2 is described below with reference to Fig. 13 and Fig. 14. The following description assumes a case in which the processing is carried out for modifying the calendar template 20 stored in the storage section 440 in the server 400 as shown in Fig. 9 based on the information, for instance, concerning a festival to be held on the fifth in a city A acquired from various types of broadcastings such as radio broadcasting or TV broadcasting.

At first, as shown in Fig. 13, a passenger which is a user of this service on a vehicle instructs a request for modifying the calendar template 20 by performing an input operation in the terminal input section 330 in the terminal unit 300. When the request instruction recognizer 372 in the processor 370 recognizes the request instruction (step S101), the request instruction recognizer 372 outputs a prespecified signal to the display controller 374 to display a set and input screen promoting input of date information, event information or the like required for modifying the calendar template 20 in the terminal display 340.

When the user inputs and sets date information, event information or the like by performing an input operation in the terminal input section 330 according to an instruction on the displayed set and input screen, the request instruction recognizer 372 recognizes the date information, event information, or the like set and inputted as described above. Then the request instruction recognizer 372 generates calendar modification request information which is information requesting modification of the calendar template 20 in which the recognized date information, even information, or the like are described (step S102), and transmits the generated calendar modification request information via the transceiver 310 and the network 200 to the server 400. When transmitting this calendar modification request information, the request instruction recognizer 372 also transmits customer identifying information specifying the terminal unit 300 (step S103).

When the server 400 receivers the calendar modification request information and customer identifying information transmitted from the terminal unit 300 (step S104), the request instruction recognizer 372 executes the processing for recognizing the date information and the event information described in the received calendar modification request information (step S105). More specifically, the date specified by the date information is recognized as the 5^{th} day, and the classification ID number associated with the event information is recognized as "ID4".

Then the calendar modifying section 459 reads out, based on the customer identifying information received in step S104 and the customer specifying information stored in the customer information table 30 in the storage section 440, the calendar template 20 associated with the terminal unit 300 having transmitted the calendar modification request information from the storage section 440 (step S 106). Then request instruction recognizer 372 determines whether various types of information recognized in step S105 are identical to the information in the calendar template 20 read out in step S106 or not (step S 107).

When it is determined in this step S 107 that the various types of information recognized in step S105 are identical to the information in the calendar template 20 read out in step S106, the calendar modifying section 459 terminates the processing without modifying the calendar template 20. On the other hand, when it is determined that the various types of information recognized in step S105 are not identical to the information in the calendar template 20 read out in step S106, the calendar modifying section modifies the calendar template 20 based on the various types of information recognized in step S105 (Step S108). More specifically, as the classification ID number of the 5^{th} day recognized in step S105 is "ID4" and the classification ID number for the 5^{th} day recognized from the calendar template 20 is "ID1", the calendar modifying section 459 changes the classification ID number for the 5^{th} day from "ID1" to "ID4" as shown in Fig. 14. Then the calendar modifying section 459 associates the calendar template 20 with the classification ID number having been changed to the terminal unit 300 having transmitted the calendar modification information, has the calendar template 20 stored in the storage section 440, and terminates the processing.

### (Processing for distributing customer-oriented information)

Next the processing for distributing customer-oriented information as an operation of the navigation system 100 is described below with reference to Fig. 15 through Fig. 18C. The following description assumes the processing for making the server 400 distribute customer-oriented information based on traffic information concerning a traffic jam occurring at a specific plate on a way to a destination or the like.

At first, as shown in Fig. 15, a user gives an instruction requesting distribution of customer-oriented information to the server 400 by performing an input operation in the terminal input section 330. When a request instruction recognizer 372 in the processor 370 recognizes the request instruction (step S201), the request instruction recognizer 372 outputs a prespecified signal to the current position recognizer 371. Further the request instruction recognizer 372 outputs a prespecified signal to the display controller 374 to have the input screen for promoting input and setting of various information required for distribution of customer-oriented information such as, for instance, destination information, request level information, and set item information for the shortest distance or the shortest time for traveling displayed on the terminal display 340.

When the current position recognizer 371 receives the prespecified signal from the request instruction recognizer 372, the current position recognizer 371 executes the processing for recognizing a current position (step S202). More specifically, the current position recognizer 371 acquired current position information by computing the current position of the vehicle based on speed data and azimuthal angle data of the vehicle outputted from the speed sensor and the azimuthal angle sensor in the sensor 320 as well as on the GPS data concerning a current position outputted from the GPS receiver. The acquired current position information is stored in the memory 360 according to the necessity.

When the user inputs and sets a destination by performing an input operation in the terminal input section 330 according to an instruction displayed on the input screen, the request instruction recognizer 372 acquires destination information concerning the destination set and inputted by the user (step S203). The acquired destination information is stored in the memory 360 according to the necessity.

Herein, when a user requests acquisition of information concerning a point which is a destination for the user by performing an input operation for a destination in the terminal input section 330, the user performs an input operation for requesting search information for the point according to the set and input screen displayed in the terminal display. The request instruction recognizer 372 acquires the information concerning the search request information for the point. Then the request instruction recognizer 372 associates the acquired information with customer identifying information such as a serial number of the terminal unit 300 stored in the memory 360 and transmits the associated information via the transceiver 310 and the network 200 to the server 400 to request distribution of the search information for the point. In response to the information requesting search of search information for a point, an information searching section 458 in the server 400 searches search information for the destination in the hierarchical way by checking mesh information at a lower layer for each area by using, for instance, the map information MP, and acquires the search information associated with the destination point from the storage section 440. Then the information searching section 458 distributes the acquired search information via the interface 410 and the network 200 to the terminal unit 300 to that the search information is displayed on the terminal display 340 of the terminal unit 300.

When the search information is, for instance, for displaying a specified area in the map information including the destination, or when the user having recognized the search information inputs and sets an instruction for display of the specified area by performing an input operation in the terminal input section 330, the processor 370 provides controls over the terminal display 340 according to the necessity to display the mesh information VMx for displaying the corresponding area. After the desired map information is displayed on the terminal display 340 as described above, the user sets the destination point by performing an input operation in the terminal input section 330, for instance, specifies the point information for the destination by moving a cursor being displayed on a map display screen to the desired point. When this point information is specified, the request instruction recognizer 372 in the processor 370 recognized the point information for the destination as destination information and stores the destination information in the memory 360 according to the necessity.

When a user selects any of the request levels A to C in correspondence to the customer-oriented information requesting distribution thereof by performing an input operation in the terminal input section 330 according to an instruction displayed on the input screen, the request instruction recognizer 372 acquires request level information concerning the selected request level (step S204). The acquired request level information is stored in the memory 360 according to the necessity.

When the user inputs and sets a set item by performing an input operation in the terminal input section 330 according to an instruction on the displayed input screen, the request instruction recognizer 372 acquires set item information concerning the set item set and inputted as described above (step S205). The acquired set item information is stored in the memory 360 according to the necessity.

Then the request instruction recognizer 372 controls the transceiver 310 so that a signal requesting distribution of customer-oriented information is transmitted together with the service request information to the server 400 (step S206). More specifically, the service request information includes the current position information, destination information, request level information, set item information stored in the memory 360 and customer identifying information such as a serial number of the terminal unit 300.

When the server 400 receives the service request information transmitted from the terminal device 300 (step S207), the server 400 stores the received service request information in the data table 50 for generation of customer-oriented information in the storage section 440 for each customer.

The CPU 450 determines whether the request level indicated by the request level information stored in the data table 50 for generation of customer-oriented information is "A" or "B" (step S208).

When the CPU 450 determines in this step S208 that the request level is not "A" nor "B", namely that the request level is "C", the traveling route information computing section 455 executes the route search processing for computing usual traveling route information concerning a traveling route from a current position of the vehicle to a destination based on the current position information, destination information, and set item information associated with the request level C and stored in the data table 50 for generation of customer-oriented information and using the map information for traveling route search in the map information and matching data MM stored in the storage section 440 (step S209).

More specifically, when data is accumulated in and available from the map information for traveling route search like in a case of a main route, the traveling route information computing section 455 executes the route search processing using the map information for traveling route search, and when the data is not accumulated in the map information for traveling route search like in a case of a back road, the traveling route information computing section 455 executes route search using matching data MM for a zone from a back road to a main road. When the route search is performed using the matching data MM, the server coordinate matching section 452 determines whether the node N is an identical point or not, and recognizes a condition of the road taking into account the link L for executing the route search. Further the traveling route information computing section 455 computes a period of time required for traveling to the destination on the traveling route indicated by the computed usual traveling route information, and computes usual traveling time information concerning the time required for traveling. The computed usual traveling route information and usual traveling time information are associated with the request level C and stored as travel-use data in the data table 50 for generation of customer-oriented information in the storage section 440 respectively.

On the other hand, when it is determined by the CPU 450 in step S208 that the request level is "A" or "B", the authenticating section 453 verifies the customer identifying information associated with the request level and stored in the data table 50 for generation of customer-oriented information to the customer specifying information stored in the customer information table 30 in the storage section 440 to authenticate the customer identifying information (step S210). Namely the traveling route information computing section 455 determines whether the same customer identifying information as that stored in the data table 50 for generation of customer-oriented information is included in the customer information table 30 or not. When it is determined in this step that the same customer identifying information is not included, the processing for distributing the customer-oriented information can not be executed, so that the traveling route information computing section 455 terminates the processing for distribution of customer-oriented information. For instance, the configuration is allowable in which, when distribution of customer-oriented information is terminated, prespecified information is transmitted to the terminal unit 300 corresponding to the customer identifying information which could not be authenticated via the interface 410 and the network 200 to display a message that the customer specifying information has not been registered in the terminal display 340 of the terminal unit 300.

When it is determined in step S208 that the request level is "A" or "B", namely when it is determined that the request is for distribution of charged customer-oriented information, the configuration is allowable in which the following processing is executed. For instance, prespecified information is transmitted via the interface 410 and the network 200 to the terminal unit 300 corresponding to the customer identifying information associated with the request level. Then the prespecified information is displayed on the terminal display 340 of the terminal unit 300 so that the user can check whether the user wants distribution of the charged customer-oriented information or not. When the user transmits information indicating that the user hopes distribution of the charged customer-oriented information via the network 200 to the server 400 by performing an input operation in the terminal input section 330, and server receives the information, the processing in step S210 described above is executed. With the configuration as described above, input miss committed by a user can be prevented, and customer-oriented information corresponding to each user's request can be provided.

When the customer identifying information is authenticated by the authenticating section 453 in step S210 and it is determined that the same customer identifying information is included in the customer information table 30 in the storage section 440, the traffic jam condition recognizer 454 in the CPU 450 acquires VICS data from the VICS. Then the traffic jam condition recognizer 454 generates current traffic jam information including a current position and a destination based on the current position information and destination information in the data table 50 for generation of customer-oriented information from the VICS data acquired as described above (step S211). The generated current traffic jam information is associated with the request level information, and stored as travel-use information in the data table 50 for generation of customer-oriented information in the storage section 440.

After the step S211 is finished, the CPU 450 further determines whether the request level indicated by the request level information stored in the data table 50 for generation of customer-oriented information is "A" or "B" (step S212).

When the CPU 450 determines in this step S212 that the request level is not "A", and that the request level is "B", the system control sifts to step S209, and the traveling route information computing section 455 executes route search for computing the usual traveling route information and the currently congested traveling route information described above. More specifically, for computing the currently congested traveling route information, the route search processing is executed by computing the currently congested traveling route information concerning a traveling route for evading a traffic jam currently occurring on a route from the current position of a vehicle to the destination, based on the current position information, destination information, and set item information associated with the request level B and stored in the data table 50 for generation of customer-oriented information and also the current traffic jam information stored in step S211 as travel-use information in the data table 50 for generation of customer-oriented information using the map information for traveling route search in the map information and the matching data MM stored in the storage section 440. Further traveling route information computing section 455 calculates a period of time required for traveling to the destination through the routes indicated by the computed usual traveling route information and the current traveling route information respectively, and also computes the currently congested route traveling time information relating to the traveling times above respectively. The usual traveling route information, currently congested route information, and currently congested route traveling time information are associated with the request level B, and are stored as travel-use information in the data table 50 for generation of customer-oriented information in the storage section 440 respectively.

On the other hand, when the CPU 450 determines in step S212 that the request level is "A", the CPU 450 acquired time information from the timer 460, and recognizes a current date from the acquired time information. Then the CPU 450 acquired the calendar template 20 from the storage section 440, and searches and recognizes a classification ID number of the data recognized from the calendar template 20 acquired as described above (step S213). The CPU 440 also searches and acquires the time-series data 12i including the current position and destination based on the current position information and destination information stored in the data table 50 for generation of customer-oriented information from the traffic jam prediction table 10 stored in the storage section 440 in response to the recognized classification DI number (step S214).

After the step S214 is finished, the CPU 450 executes the route search processing in step S209 for computing the usual traveling route information, the above-described currently congested route information, and the traffic jam predicted traveling route information. More specifically, computing of the traffic jam predicted route information is executed as described below.

The traffic jam condition recognizer 454 in the CPU 450 acquires the current traffic jam information stored in step S211 as travel-use data in the data table 50 for generation of customer-oriented information, and also acquires the current date and time from the timer 460. Then the traffic jam condition recognizer 454 computes, based on the acquired current traffic jam condition information and the current date, estimated arrival time indicating arrival time when a vehicle arrives at a given point in each of the routes based on the usual traveling route information and the currently congested traveling route information computed by the traveling route information computing section 455. Then the traffic jam condition recognizer 454 predicts, based on the time-series data 12i acquired in step S214, a condition of traffic jam at the estimated arrival time at a given point in each of the routes to generate traffic jam prediction information concerning the predicted traffic jam conditions. The generated traffic jam prediction information is associated with the request level A, and is stored as travel-use data in the data table 50 for generation of customer-oriented information in the storage section 440.

The CPU 450 executes the route search processing with the traveling route information computing section 455, based on the current position information, destination information, set item information associated with the request level A and stored in the data table 50 for generation of customer-oriented information as well as on the current traffic jam information stored as travel-use data, the traffic jam prediction traveling route information concerning a traveling route evading the currently occurring traffic jams and predicted traffic jams on a route from the current position of the vehicle to the destination by using the map information for traveling route search in the map information and matching data MM stored in the storage section 440. Further the CPU 450 computes, based on the current traffic jam information and traffic jam prediction information, periods of time required for traveling to the destination on each of the routes indicated by the usual traveling route information, current traveling route information , and traffic jam predicted traveling route information respectively, and computes the traffic jam prediction traveling time information concerning the traveling times respectively. The computed usual traveling route information, currently congested traveling route information, and traffic jam predicted traveling route information are associated with the request level A and are stored as travel-use data in the data table 50 for generation of customer-oriented information respectively.

When the CPU 450 computes the traveling route information in step S209, the CPU 450 generates customer-oriented information to be provided to the customer with the customer-oriented information generating section 456 (step S215).

When it is determined in step S208 that the request level is "C", the CPU 450 searches and acquires prespecified information from the map information stored in the storage section 440. Namely the CPU 450 searches and acquires matching mesh information MMx of matching data MM including nodes N and links L indicating a road corresponding to a traveling route based on the usual traveling route information associated with the request level C and stored as travel-use data in the data table 50 for generation of customer-oriented information, mesh information VMx for display of display data VM in other areas, name information VMxA in the area corresponding to the matching mesh information MMx, and background information VMxC. Then the CPU 450 associates the various types of information acquired as described above, current position information, destination information, usual traveling route information as travel-use data, and usual traveling time information associated with the request level C and stored in the data table 50 for generation of customer-oriented information with each other to generate customer-oriented information.

When it is determined in step S212 that the request level is "B", the CPU acquires prespecified information from the map information stored in the storage section 440. Namely the CPU 450 searches and acquires the matching mesh information MMx of matching data MM including nodes N and links L indicating a road corresponding to a traveling route based on the usual traveling route information and currently congested traveling route information associated with the request level B and stored as travel-use data in the data table 50 for generation of customer-oriented information, mesh information VMx for display of display data VM in other areas, name information VMxA in the area corresponding to the matching mesh information MMx, and background information VMxC. Then the CPU 450 associates the various types of information acquired as described above with the current position information, destination, usual traveling route information as travel-use data, and currently congested route traveling time information associated with the request level B and stored in the data table 50 for generation of customer-oriented information to generate the customer-oriented information. Further the CPU 450 associates the various types of information as described above with the current position information, destination information, and currently congested route traveling time information corresponding to the currently congested traveling route information to generate the customer-oriented information. Namely, when the request level is "B", the CPU 450 generates two types of customer-oriented information corresponding to the usual traveling route information and currently congested traveling route information respectively.

Further when it is determined in step S212 that the request level is "A", the CPU 450 searches and acquires prespecified information from the map information stored in the storage section 440. Namely, the CPU 450 searches and acquires the matching mesh information MMx of matching data MM including nodes N and links L indicating roads corresponding to traveling routes based on the usual traveling route information, currently congested traveling route information, and traffic jam predicted traveling route information respectively associated with the request level A and stored in the data table 50 for generation of customer-oriented information, mesh information VMx for display of display data VM in other areas, name information VMxA in the area corresponding to the matching mesh information MMx, and background information VMxC. Then the CPU 450 associates the various types of information with the current position information, destination information, usual traveling route information as travel-use data, and traffic jam predicted route traveling time information corresponding to the usual traveling route information associated with the request level A and stored in the data table 50 for generation of customer-oriented information to generate customer-oriented information. Further the CPU 450 associates the various types of information acquired as described above with the current position information, destination information, currently congested traveling route information as travel-use data, and traffic jam predicted route traveling time information corresponding to the currently congested traveling route information associated with the request level A and stored in the data table 50 for generation of customer-oriented information to generate customer-oriented information. Further the CPU 450 associates the various types of information acquired as described above with the current position information, destination information, traffic jam predicted traveling route information as travel-use data, and traffic jam predicted route traveling time information corresponding to the traffic jam predicted traveling route information associated with the request level A and stored in the data table 50 for generation of customer-oriented information to generate the customer-oriented information. Namely when the request level is "A", the CPU 450 generates three types of customer-oriented information corresponding to the usual traveling route information, currently congested traveling route information, and traffic jam predicted traveling route information.

The CPU 450 controls the interface 410 with the information providing section 457 and based on the customer-oriented information included in the data table 50 for generation of customer-oriented information in the storage section 440, and transmits the customer-oriented information generated by the customer-oriented information generating section 456 in step S215 to the prespecified terminal unit 300 (step S216).

Then processor 370 of the terminal unit 300 receives the customer-oriented information transmitted from the server 400 (step S217). Then the processor 370 executes the coordinate matching processing for matching data MM included in the received customer-oriented information with the coordinate matching section 376 (step S218), recognizes a condition of a road, namely, a road connection condition, and stores the data in the memory 360 according to the necessity. Further the processor 370 makes the display controller 374 display the received customer-oriented information on the terminal display 340.

In this step, when a user selects the request level C requesting distribution of customer-oriented information not evading a currently occurring traffic jam and a predicted traffic jam and customer-oriented information corresponding to the request C is distributed, for instance, the display screen shown in Fig. 16 is displayed on the terminal display 340.

Namely, Fig. 16 shows the display based on customer-oriented information for a traveling route already set. In this figure, a current position mark S indicating a current position of a vehicle based on current position information, a destination mark G indicating a destination of the vehicle based on destination information, traveling routes K1 corresponding to roads R11, R12, and R13 with the shortest distance based on the usual traveling route information, a required time mark Nt adjacent to the current position mark S as well as to the destination mark G are displayed being overlaid on the map information respectively.

Further when a user selects the request level B requesting distribution of customer-oriented information enabling the user to evade a currently occurring traffic jam and two types of customer-oriented information corresponding the request level B is distributed, for instance, the display screens as shown in Fig. 17A and Fig. 17B are displayed on the terminal display 340.

Namely, Fig. 17A shows a display screen displayed on the customer-oriented information corresponding to the usual traveling route information out of the two types of received customer-oriented information. A current position mark S, a destination mark G, a traveling route K1, a current traffic jam mark Jg adjacent to a road R12 based on the current traffic jam information, and a required time mark Nt adjacent to the current position mark S based on the currently congested route traveling time information as well as to the destination mark G are displayed being overlaid on the map information respectively.

Fig. 17B shows a display screen based on the customer-oriented information corresponding to the currently congested traveling route information out of the two types of received customer-oriented information. A current position mark S, a destination mark G, traveling routes corresponding to the roads R11, R14, R15, and R13 based on the currently congested traveling route information, and a current traffic jam mark Jg adjacent to the road R12 based on the current traffic jam information, and a required time mark Nt adjacent to the current position mark S and the destination mark G based on the currently congested route traveling time information are displayed being overlaid on the map information respectively.

Then the two types of customer-oriented information, for instance, as shown in Fig. 17A and Fig. 17B are shown on the terminal display 340 so that the user can select either one of the traveling routes K1 and K2, and when the user performs an input operation for selecting either of the two types of customer-oriented information, a traveling route is set.

Further, when the user selects the request level A for requesting distribution of customer-oriented information enabling the user to evade a currently occurring traffic jam and a predicted traffic jam and three types of customer-oriented information each corresponding to the request level A are distributed, for instance, the display screens as shown in Fig. 8A through Fig. 18C are shown on the terminal display 340.

Namely the display screen shown in Fig. 18A is displayed based on the customer-oriented information corresponding to the usual traveling route information out of the three types of customer-oriented information received as described above. A current position mark S, a destination mark G, a traveling route K1, a current traffic jam mark Jg, a traffic jam prediction mark Jy adjacent to a road R13 based on the traffic jam prediction information, and a required time mark Nt adjacent to the current position mark S and the destination mark G based on the traffic jam predicted route traveling time information are displayed being overlaid on the map information respectively.

The display screen shown in Fig. 18B is displayed based on the customer-oriented information corresponding to the currently congested traveling route information out of the received three types of customer-oriented information. A current position mark S, a destination mark G, a traveling route K2, a current traffic jam mark Jg, a traffic jam prediction mark Jy adjacent to a road R13 based on the traffic jam prediction information, and a required time mark Nt adjacent to the current position mark S and the destination mark G based on the traffic jam predicted route traveling time information are displayed being overlaid on the map information respectively.

The display screen displayed in Fig. 18C is displayed based on the customer-oriented information corresponding to the traffic jam predicted route traveling route information out of the received three types of customer-oriented information. A current position mark S, a destination mark G, a traveling route K3, a current traffic jam mark Jg, a traveling route K3 corresponding to roads R11, R14, R16, R17, and R18 based on the traffic jam predicted traveling route information, a traffic jam prediction mark Jy adjacent to a road R13 based on the traffic jam prediction information, and a required time mark Nt adjacent to the current position mark S and the destination mark G based on the traffic jam predicted route traveling time information are displayed being overlaid on the map information respectively.

The three types of customer-oriented information shown in Fig. 18A, Fig. 18B, and Fig. 18C are shown on the terminal display 340 so that the user can select any one of the traveling routes K1 to K3, and when the user performs an input operation for selecting any of the three types of customer-oriented information, the traveling route is set.

Then the processor 370 recognizes a traveling condition of the vehicle based on the data outputted from a speed sensor, an azimuthal angle sensor, and an acceleration sensor in the sensor 320 as well as on GPS data outputted from the GPS receiver. Further the processor 370 displays or phonetically provides guidance information concerning a travel of the vehicle based on the recognized traveling condition and the route guidance information included in the traveling route information to provide guidance for traveling of the vehicle (step S219).

More specifically, the display controller 374 in the processor 370 links the nodes N in the matching mesh information MMx included in the customer-oriented information received in step S217 with a polygonal line, processing the polygonal line based on the road construction described in the link array block information constituting the matching data MM, and has roads in an area corresponding to the match mesh information VMxC including the traveling route displayed on the terminal display 340. Further, the display controller 374 has the name information VMx and background information each constituting a map other than roads in the area corresponding to the matching mesh information MMx in the mesh information VMx for display included in the customer-oriented information received in step 217 displayed in the overlaid state. The current position is displayed in the overlaid state on the displayed map.

When displaying the current position in the overlaid state, the map matching processing is executed based on the matching data MM so that the display based on the current position information for the vehicle is not off from the displayed road. Namely, the processor 370 corrects the current position information according to the necessity so that the displayed current position is on the matching data MM for the traveling route and also so that the displayed position is on the link array constituting consecutive links L. The current position is displayed being overlaid on the map as described above for providing guidance to the user. When the current position is set on the required position, guidance for the traveling direction or the like is provided with a display or voices as described above. The coordinate matching processing is performed in step S218 in the description above, but the coordinate matching processing may be performed during the matching processing, or before the matching processing.

The map to be displayed in areas other than that described above when a request for checking other areas is inputted with an input operation, for instance, on the terminal input section 330 is displayed based on the mesh information VMx for display included in the received customer-oriented information.

On the other hand, the server 400 executes the electronic settlement processing for charging the information service fee corresponding to the customer-oriented information transmitted in response to the request level information associated with the customer identifying information used for transmission and included in the data table 50 for generation of customer-oriented information (step S220).

More specifically, when the request level indicated by the request level information is "A" or "B", the information providing section 457 establishes connection to a management server under management, for instance, of a credit company not shown, via a network. Then the information providing section 457 checks, based on the customer-oriented information corresponding to the customer identifying formation used when transmitting the customer-oriented information and stored in the customer information table 30, validity of the card or the like (credit verification). After the credit verification, the information providing section 457 identifies the information service fee corresponding to request level information for the transmitted customer-oriented information (for instance, 3000 yen for request level "A" and 1000 yen for request level "B"), and settlement for the information service fee is electronically made with the credit company based on the identified information service fee. When the request level information indicates the request level "C", the information providing section 457 does not execute the electronic settlement described above.

Then the information providing section 457 completes the electronic settlement in the step S220, and then transmits the information indicating completion of the settlement via the network 200 to the terminal unit 300. When the terminal unit 300 receives the information indicating completion of the settlement, the user can recognizes that the electronic settlement has been finished on the terminal display 340 of the terminal unit 300.

It is to be understood that the configuration is not limited to that in which information indicating completion of settlement is transmitted via the network 200 to the terminal unit 300, and the configuration is allowable in which the information indicating completion of the settlement is transmitted to a mail address of the customer included in the customer information table 30, or in which the information indicating completion of settlement is mailed based on an address of the customer included in the customer information table 30.

### [Advantages of the Embodiments]

(1) In the embodiments described above, the interface 410 comprising the positional information acquiring section, customer identifying information acquiring section, and request information acquiring section acquired current position information, customer identifying information, and service request information. The authenticating section 453 verifies the acquired customer identifying information to the customer specifying information including the customer identifying information previously stored in the customer information table 30 of the storage section 440 and specifying the customer to authenticate the acquired customer identifying information. The customer-oriented information generating section 456 acquires the travel-use information when traveling from the current position based on the acquired current position information in response to the acquired service request information, and generates customer-oriented information to be provided to the customer based on the acquired current position information and travel-use information as well as on the map information previously stored in the storage section 440. The information providing section 457 processes the generated customer-oriented information so that the information can be provided to the customer, and at the same time makes settlement for the information service fee based on the service fee information concerning an information service fee to be charged when the customer-oriented information previously stored in the accounting information table 40 of the storage section 440 based on the customer specifying information corresponding to the authenticated customer identifying information. Because of the feature as described above, by generating customer-oriented information corresponding to a request from a customer and providing the generated customer-oriented information to the customer, a user can easily request provision of customer-oriented information satisfying needs of each customer, and also the user can easily recognize contents of the provided customer-oriented information, which results in improvement of convenience for each user. Further with the customer-oriented information as described above, each customer can travel from the current position according to the customer's needs. Further customer-oriented information corresponding to the service request information from a customer is provided to the customer, and the information service fee correctly corresponding to the provided customer-oriented information is settled, so that a user can receive customer-oriented information only satisfying the customer's needs by paying the information service fee, and a provider of the information can charge an information service fee corresponding to the provided customer-oriented information, and thus benefits are provided to both the customer and the information provider. Because of the features as described above, improved convenience of the navigation system 100 as an information service system for providing customer-oriented information can be ensured.
(2) The service request information includes a plurality of request level information each corresponding to a request level of the customer-oriented information. Further a plurality of information service fees each corresponding to request level information are set in the service fee information stored in the accounting information table 40. When the customer-oriented information generating section 456 recognizes that the request level based on the service request information is high, the customer-oriented information generating section 456 generates a plurality of customer-oriented information based on the acquired current position information and travel-use information as well as the map information stored in the storage section 440. Further the information providing section 457 processes the plurality of generated customer-oriented information so that the information can be provided to the customer, and makes settlement for the information service fee based on the service fee information corresponding to the request level information based on the customer specifying information corresponding to the customer identifying information authenticated as described above. Because of the features as described above, as a quantity of customer-oriented information provided in response to a request level increases, a user's freedom in requesting customer-oriented information satisfying the customer's needs is improved with the capability of satisfying the customer's needs improved, so that the convenience for each user is further improved. In addition, a plurality of information service fees are set in correspondence to a plurality of request levels, so that a customer can select a request level for customer-oriented information according to an information service fee, so that the navigation system 100 becomes further easier for users to use.
   A request level corresponding to general customer-oriented information is set to "C", and as a quantity of general customer-oriented information increases, the request level is set to "B" and then "A". The information service fees corresponding to the request levels A to C are set to "3000 yen", "2000 yen", and "0 yen" respectively. With this configuration as described above, information service for customer-oriented information frequently requested is chargeable, so that, although general customer-oriented information is provided at no charge, a user can acquire effective customer-oriented information with rich contents by paying an information service fee, and a provider of the information service can charge the information service fee corresponding to a quantity of customer-oriented information provided to the customer, and therefore the advantages for both the customer and the information provider are ensured.
(3) The information providing section 457 processes a plurality of customer-oriented information so that the information can be provided to a customer in the comparative state. Because of this feature, the customer can compare a plurality of customer-oriented information to each other, so that the customer can easily recognize which customer-oriented information is effective information satisfying the customer's needs.
(4) The interface 410 acquires current position information, and also acquires destination information concerning a destination required by a customer. Further the traveling route information computing section 455 computes traveling route information concerning a traveling route from a current position of a customer to a destination required by the customer based on the current position information and destination information acquired via the interface 410 as well as on the map information stored in the storage section 440. Then the customer-oriented information generating section 456 acquires traveling route information as travel-use information in response to service request information, and generates customer-oriented information to be provided to a customer based on the current position information, map information, and traveling route information. Because of this feature, by generating customer-oriented information including customer-oriented information together with current position information and map information corresponding to service request information and providing the generated customer-oriented information to a customer, it is possible to make a user recognize the traveling route information included in customer-oriented information as information effective for use when traveling from a current position to a place to which the user hopes to travel. For instance, with the configuration in which a plurality of customer-oriented information including various traveling route information are provided when the request level is high, it is possible for a customer having issued a high level request to easily select an optimal traveling route satisfying the customer's needs from various traveling route information.
(5) The customer-oriented information generating section 456 acquires, in response to service request information, traffic information concerning a traffic condition of a movable body associated with a specified position in the map information as travel-use information, and generates customer-oriented information to be provided to a customer based on the current position information, map information, and traffic information. Because of the feature, by generating customer-oriented information including traffic information together with the current position information and map information in response to service request information and providing the customer-oriented information to the customer, it is possible to make the customer recognize the traffic information included in the customer-oriented information as information effective in traveling from the current position to a given place. For instance, with the configuration in which customer-oriented information including traffic information is provided when the request level is high, it is possible to make a customer having issued a high level request for information service recognize a traffic condition of the movable body based on the traffic condition so that the customer can travel from the current position to the customer's destination through a route satisfying the customer's needs.
(6) The traffic information is traffic jam condition information concerning a traffic jam for a movable body. Because of this, with the configuration in which customer-oriented information including traffic jam condition is provided to a customer when the customer's request level is high, it is possible to make the customer recognize a traffic jam condition for a movable body based on the traffic jam condition information so that the customer can travel from the current position through a traveling route such as a traveling route satisfying the customer's needs and evading a currently occurring traffic jam.
(7) The traffic jam information includes traffic jam prediction information concerning changes of the traffic jam condition information from time to time computed based on the statistic traffic information obtained by statistically processing data concerning traffic conditions in the past with time elements. Because of this feature, with the configuration in which customer-oriented information including traffic condition information having traffic jam prediction information is provided when the request level is high, it is possible to make the customer having issued a high level request recognize a current traffic jam condition and predicted traffic conditions for the customer's movable body based on the traffic jam condition information and travel from the current position through a route satisfying the customer's needs.
(8) The customer-oriented information generating section 456 acquires, in response to service request information, traffic information and traveling route information computed by the traveling route information computing section 455 as travel-use information, and generates customer-oriented information to be provided to a customer based on the current position information, map information, traffic information, and traveling route information. Because of the feature, by generating, in response to service request information, customer-oriented information including both traffic information and traveling route information together with the current position information and map information and providing the customer-oriented information to a customer, it is possible to make the customer recognize both the traffic information and traveling route information included in the customer-oriented information as information effective for traveling from the current position to the destination. For instance, with the configuration in which, when a request level from a customer is high, a plurality of customer-oriented information including traffic information associated with a plurality of traveling route information as well as traffic information associated with the routes respectively are provided to the customer, it is possible to more easily make the customer having issued a high level request select an optimal traveling route such as a traveling route satisfying the customer's needs and evading a traffic jam.
   The customer-oriented information generating section 456 generates, when the request level is "C", customer-oriented information including usual traveling route information concerning a traveling route computed by the traveling route information computing section 455 and corresponding to the set item information (shortest period of time or shortest distance) from the current position to the destination. When the request level is "B", the customer-oriented information generating section 456 generates two customer-oriented information by associating the current traffic jam information with the usual traveling route information and the currently congested traveling route information concerning a traveling route evading a currently occurring traffic jam based on the current traffic jam information as traffic information respectively. Further when the request level is "A", the customer-oriented information generating section 456 generates three customer-oriented information by associating the current traffic jam information and traffic jam prediction information with the usual traveling route information, currently congested traveling route information and traffic jam predicted traveling route information concerning a traveling route evading a currently occurring traffic jam and predicted traffic jams based on the current traffic jam information and traffic jam prediction information as traffic information computed by the traveling route information computing section 455 respectively. Because of this feature, by making a customer having selected the request level B compare two types of customer-oriented information to each other, it is possible to make the customer recognize which of the traveling routes based on the usual traveling route and the currently congested traveling route information is effective based on the current traffic jam information. Further when a customer selects the request level "A", it is possible to make the customer recognize which of the traveling routes based on the usual traveling route information, currently congested traveling route information, and traffic jam predicted traveling route information is effective based on the current traffic jam information and the traffic jam prediction information by enabling the customer to compare the three types of information to each other. As described above, effective customer-oriented information can be provided in correspondence to a request level, namely to an information service fee to be charged, so that the convenience for each customer to satisfy the customer's needs is further improved.
(9) The traveling route information computing section 455 computes traveling route information, and also computes traveling time information concerning a traveling period of time required for traveling on the computed traveling route based on the traveling route information and also reflecting the traffic information on the traveling route. Then the customer-oriented information generating section 456 acquires traffic information, traveling route information, traveling time information as travel-use information in correspondence to the service request information, and generates customer-oriented information to be provided to a customer based on the current position information, map information, traffic information, traveling route information, and traveling time information. Because of this feature, in response to the service request information, by generating customer-oriented information including traveling time information together with the current position information, map information, traffic information, and traveling route information and also by providing the customer-oriented information to a customer, it is possible to make the customer recognize not only the traffic information and traveling route information but also traveling time information as information effective in traveling from the current position to the destination. For instance, with the configuration in which a plurality of traveling route information and a plurality of customer-oriented information including traveling time information required when traveling on the traveling routes based on a plurality of traveling route information and associated with the traveling route information respectively and also reflecting the traffic information on each of the routes when a request level from a customer is high, it is possible to more easily make the customer select an optima traveling route satisfying the customer's needs such as a traveling route requiring the shortest period of time for traveling from a plurality of customer-oriented information.
   When the request level is "C", the customer-oriented information generating section 456 generates customer-oriented information including usual traveling route information and usual traveling time information concerning a traveling time when traveling on the traveling route based on this usual traveling route information. Further, when the request level is "B", the customer-oriented information generating section 456 generates two types of customer-oriented information by associating the current traffic jam information, usual traveling route information based on the current traffic jam information and also reflecting a traffic jam currently occurring, and the currently congested route traveling time information concerning a traveling time required when traveling on each of the traveling routes based on the currently traveling route information with the usual traveling route information and the currently congested traveling route information respectively. Further when the request level is "A", the customer-oriented information generating section 456 generates three types of customer-oriented information by associating the current traffic jam information, traffic jam prediction information, usual traveling route information reflecting a current traffic jam based on the current traffic jam information and predicted traffic jams based on the traffic jam prediction information, currently congested traveling route information, and traffic jam predicted route traveling time information concerning a traveling time required when traveling on each of the traveling routes based on the traffic jam predicted route information with the usual traveling route information, currently congested traveling route information, and with the traffic jam predicted traveling route information respectively.
   Because of the feature, by enabling a customer having selected the request level B to compare the two types of customer-oriented information to each other, it is possible to make the customer recognize which of the traveling route based on the usual traveling route information and the currently congested traveling route information is more effective based on the current traffic jam information and the currently congested route traveling time information. Further by enabling a customer having selected the request level A to compare the three types of customer-oriented information, it is possible to make the customer recognize which of the raveling routes based on the usual traveling route information, currently congested traveling route information, and traffic jam predicted traveling route information is effective based on the current traffic jam information, traffic jam prediction information, and traffic jam predicted route traveling time information. As described above, more effective customer-oriented information is provided in response to a request level, namely to an information service fee to be charged, the convenience for each customer to satisfy the customer's needs is further improved.
(10) The interface 410 acquires customer identifying information, current position information, and request level information from the terminal unit 300 as a communication terminal unit owned by a customer and capable of information transaction. The information providing section 457 transmits the customer-oriented information generated by the customer-oriented information generating section 456 to the terminal unit 300 so that the customer-oriented information is provided to the customer. Because of this feature, as the terminal unit 300 receives various types of information previously associated with each other as service request information, the interface 410 can correctly and efficiently execute the processing for distribution of customer-oriented information as well as for making settlement for the information service fee corresponding to the provided customer-oriented information. Namely the interface 410 is not required to compare a customer as a target for provision of information to the contents of information when the interface 410 receives various information from a plurality of terminal units 300, so that the interface 410 can quickly distribute required customer-oriented information and make settlement for the information service fee concerning the provided customer-oriented information, thus the processing for distribution of customer-oriented information as well as for making settlement of the information service fee being executed quickly and correctly.
   When making settlement for the information service fee, the processing for electronic settlement is carried out based on the information service fee information stored in the accounting information table 40 and the customer specifying information (a credit-card number, an expiration date for the card, or the like) corresponding to the customer identifying information used when transmitting the customer-oriented information and stored in the customer information table 30. Because of this feature, the processing for settlement can easily be performed without requiring a customer to perform complicated operations such as signing, and the convenience of the navigation system 100 is further improved.
(11) The customer identifying information is a serial number specific to each terminal unit 300, and the terminal unit 300 has the memory 360 for storing this serial number. The interface 410 acquired the serial number stored in the memory 360 of the terminal unit 300. Because of this feature, as a serial number, which is mechanical information, is used as customer identifying information, it is not required to assign new information to the terminal unit 300 when executing the processing for distribution of customer-oriented information and settlement of the information service fee for the provided information, thus distribution of and service fee settlement for customer-oriented information being executed efficiently.
(12) The navigation system 100 comprises the server 400 as a device for providing information, terminal unit 300, and a communicating section for connecting the server 400 to the terminal unit(s) 300 so that information can be transacted therebetween. Because of this feature, even when the terminal unit 300 and the server 400 are provided remotely, the processing for distributing customer-oriented information and making settlement of the information service fee for the provided customer-oriented information can easily and smoothly be executed.
(13) The communicating section connects the server 400 to the terminal unit 300 via the network 200 so that information can be transacted therebetween. Because of this feature, the server 400 can be connected via the network 200 to a plurality of terminal units 300 provided remotely, so that the processing for distributing customer-oriented information and making settlement for the information service fee for the provided customer-oriented information can smoothly be executed with the convenience for users substantially improved.
   When required registration for utilization of the navigation system 100 is made beforehand, customer-oriented information can be distributed even a mobile telephone as the terminal unit 300, so that the convenience for customers is further improved.
(14) The information service program according to the present embodiment makes a compute execute the information providing method described above. Because of the feature, for instance, by utilizing a general-purpose computer, use and applications of the invention are substantially promoted.
(15) The recording medium according to the present invention stores therein the information service program in the computer-readable state. Therefore, information service program for having the information providing method executed is recorded in a recorded medium, so that handling of the program is easy, which substantially promotes applications of the present invention.

### [Modifications of the Embodiments]

Preferred embodiments of the present invention were described above, but the present invention is not limited to the embodiments, and various improvements and alternations in the design are possible without departing the gist of the present invention.

In the embodiments described above, the travel-use data stored in response to the request level information included in the service request information as travel-use information in the data table 50 for generation of customer-oriented information comprises traffic information such as current traffic jam information or traffic jam prediction information, traveling route information such as usual traveling route information, currently congested traveling route information, and traffic jam predicted traveling route information, traveling time information such as usual traveling route information, currently congested route traveling time information, and traffic jam predicted route traveling information, but the present invention is not limited to this configuration, and the configuration as described below may be employed.

For instance, the travel-use data may comprise only the traffic information. Alternatively the travel-use data may comprise only the traveling route information. With the configuration as described above, objects of the present invention can be achieved, and further customer-oriented information can easily be generated and the generated customer-oriented information can quickly be delivered.

In addition, also weather information concerning weather conditions associated with a specified position in the map information may be employed as the travel-use data. With the configuration as described above, by generating customer-oriented information including weather information and distributing the customer-oriented information in response to a request from a customer, it is possible to make the customer having received the information select a route evading places, for instance, where it is raining or snowing heavily, or where heavy rain fall or heavy snow fall is predicted when traveling from the current position to any other place. When the travel-use data comprises only weather information, customer-oriented information can easily be generated, so that the processing for distributing the customer-oriented information can quickly be executed. When the customer-oriented information associated not only with the traffic information, traveling route information, and traveling time information, but also with weather conditions and the customer-oriented information is distributed in response to a request from a customer, it is possible to make the customer recognize the weather information together with the traffic information and traveling time information as information indicating which traveling route is effective, so that the customer can determine an optimal traveling route satisfying the customer's needs.

Further, for instance, information concerning a road, such as information concerning a width of a road, a number of lanes on the road, a conditioned state of the road, and congestion thereon may be employed as the travel-use data. With the configuration as described above, by generating customer-oriented information including the information concerning a road and distributing the customer-oriented information to a customer in response to the customer's request, it is possible to make the customer having received the information select a route evading a road such as a road not conditioned so well, or a road heavily congested and difficult to smoothly drive thereon based on the information concerning a road included in the customer-oriented information. When the travel-use data comprises only information concerning a road, customer-oriented information can easily be generated, and the generated customer-oriented information can quickly be distributed. Further by generating customer-oriented information associzted not only with the traffic information, traveling route information, and traveling time information, but also the information concerning a road and distributing the customer-oriented information to a customer in response to the customer's request, it is possible to make the customer having received the information recognize the information concerning a road together with the traffic information and traveling time information as information indicating which route is effective, so that the customer can determine an optimal traveling route satisfying the customer's needs.

Further traveling distance information concerning a traveling distance over a traveling route based on the traveling route information may be employed as travel-use data. With the configuration as described above, by generating customer-oriented information associated not only with the traffic information, traveling route information, and traveling time information, but also with the traveling distance information and distributing the customer-oriented information to a customer in response to the customer's request, it is possible to make the customer recognize the traveling distance information together with the traffic information and traveling time information as information indicating which route is effective, so that the customer can determine an optimal route satisfying the customer's needs.

Further traffic jam level information concerning a level of a traffic jam in the current traffic jam information and the traffic jam prediction information constituting the traffic information may be employed as the travel-use data. The traffic jam level information is generated, for instance, based on the VISC data. More specifically, the traffic level information concerning a level of a traffic jam is generated by checking presence of a traffic jam according to the congestion degree and based on information concerning the congestion degree as well as a length of the traffic jam as well as on the link traveling time information. For instance, this traffic jam level information comprises a product of a length of a traffic jam multiplied by a link traveling time, or four congestion levels: "heavy", "medium", "light", and "slight" levels classified depending on whether a congestion degree, a length of a traffic jam, or a link traveling time are the threshold values or more or not respectively. With the configuration as described above, by generating customer-oriented information including the traffic jam level information and distributing the customer-oriented information to a customer in response to the customer's request, it is possible to make the customer having received the information select a route evading a route with the traffic jam level of "heavy" or the like based on the traffic jam level information included in the customer-oriented information when traveling from the current position to any other place. When the travel-use data comprises only the traffic jam level information, customer-oriented information can easily be generated, and the generated customer-oriented information can easily be distributed to a customer. Further by generating customer-oriented information associated not only with the traveling route information and traveling time information but also to the traffic jam level information and distributing the customer-oriented information to a customer, it is possible to make the customer recognize the traffic jam level information together with the traveling time information as information indicating which route is effective, so that the customer can determine an optimal route satisfying the customer's needs.

In the embodiment described above, the request level information is classified to three categories, namely to the request levels A to C, and the service fee information is set to any of three categories, namely "3000 yen", "2000 yen", and "0 yen" in response to the request levels A to C, but the present invention is not limited to this configuration. For instance, the configuration is allowable in which two types of request level information are set for two request levels and the service fee information is set to two types of "charged" and "free of charged" corresponding the two request levels respectively. Alternatively, also the configuration is allowable in which four or more types of service fee information are set for four or more request levels and four or more service fee information are set for the four or more request levels. The information service fee as the service fee information is not limited to "3000 yen", "2000 yen", and "0 yen", and any fee may be employed.

In the embodiment described above, two types of customer-oriented information corresponding to the request level B and three types of customer-oriented information corresponding to the request level A are displayed on the terminal display 340 of the terminal unit 300 so that the customer can compared the different types of information to each other, but the present invention is not limited to this configuration. Any configuration is allowable so long as a customer can compares a plurality of customer-oriented information to each other, and for instance, the configuration may be employed in which a plurality of distributed customer-oriented information are displayed in response to an input operation by a customer on the terminal input section 330 on the terminal display 340 so that the customer can compares the plurality of customer-oriented information to each other, or in which any of a plurality of customer-oriented information distributed to a customer is displayed on the terminal display 340.

In the embodiment described above, the customer-oriented information corresponding to the request level C is generated so that the information includes one usual traveling route information. The two types of customer-oriented information corresponding to the request level B are generated so that each of the customer-oriented information includes one usual traveling route information and one currently congested traveling route information. Further the three types of customer-oriented information corresponding to the request level A are generated so that each of the three types of customer-oriented information includes one usual traveling route information, one currently congested traveling route information, and one traffic jam predicted traveling route information respectively. However, the present invention is not limited to the configuration as described above, and the configuration is allowable in which a plurality of customer-oriented information each including a plurality of usual traveling route information are generated in response to the request level C. Further the configuration is allowable in which a plurality of customer-oriented information each including a plurality of usual traveling route information and a plurality of currently congested traveling route information respectively are generated in response to the request level B. Further the configuration is allowable in which a plurality of customer-oriented information each including a plurality of usual traveling route information, a plurality of currently congested traveling route information, and a plurality of traffic jam prediction information respectively are generated in response to the request level A. With the configuration as described above, it is possible to make a customer correctly determine an effective traveling route.

In the embodiments described above, traffic information such as current traffic jam information and traffic jam prediction information and traveling route information such as usual traveling route information, currently congested traveling route information, and traffic jam predicted traveling route information are generated in response to a request level, and the various types of information are stored as travel-use data in data table 50 for generation of customer-oriented information of the storage section 440. The customer-oriented information generating section 456 generates customer-oriented information based on the travel-use data stored in the data table 50 for generation of customer-oriented information. The present invention is not, however, limited to the configuration as described above. For instance, the configuration is allowable in which traffic information or traveling route information is generated regardless of a request level and the customer-oriented information generating section 456 acquires the travel-use data such as traffic information and traveling route information generated in response to a request level to generate customer-oriented information.

In the embodiments described above, the configuration may be employed in which the traffic jam condition recognizer 454, traveling route information computing section 455, information searching section 458, and calendar modifying section 459 in the server 400 are omitted. With the configuration as described above, customer-oriented information can be generated by acquiring current traffic jam information, traffic jam prediction information, and traveling route information or the like as travel-use information, for instance, from an external server, so that configuration of the server 400 can be simplified.

In the embodiment described above, the information providing section 457 electronically makes settlement for the information service fee based on the customer specifying information corresponding to the acquired customer identifying information and stored in the customer information table 30 of the storage section 440, but the present invention is not limited to this configuration. For instance, the configuration may be employed in which an address or a mail address of a customer is acquired based on the customer specifying information stored in the customer information table 30 of the storage section 440 and an invoice is delivered by mail or in the form of an electronic mail for charging the information service fee.

In the embodiment described above, the terminal unit 300 is not limited to a on-vehicle type or a portable type one loaded on a vehicle as a movable body, the terminal unit is installed as a terminal unit at a specific position. For instance, when the terminal unit 300 is installed in a parking area along a highway or in a convenience store, customer-oriented information can be provided even to a customer not having the on-vehicle type or portable type of terminal unit 300, so that utilization of the navigation system 100 can further be promoted.

Specific constructions and procedures for carrying out the invention can be changed and modified according to the necessity within a range in which objects of the present invention can be achieved.

### [Advantages of the Embodiments]

In the embodiments described above, the interface 410 comprising the positional information acquiring section, the customer identifying information acquiring section, and the request information acquiring section acquires current position information, customer identifying information, and service request information. The authenticating section 453 verifies, in response to the acquired service request information, the acquired identifying information to the customer specifying information including the customer identifying information previously stored in the customer information table 30 of the storage section 440 and identifying a customer to authenticate the acquired customer identifying information. The customer-oriented information generating section 456 acquires, in response to the acquired service request information, the travel-use information to be used when traveling from the current position based on the acquired current position information, and generates customer-oriented information to be provided to a customer based on the acquired current position information and travel-use information and also on the map information stored in the storage section 440. The information providing section 457 processes the generated customer-oriented information so that the information can be provided to the customer, and makes settlement, based on the customer specifying information corresponding to the authenticated customer identifying information, for the information service fee based on the service fee information concerning the information service fee to be charged when customer-oriented information is provided and previously stored in the accounting information table 40 of the storage section 440. With the features as described above, each customer can request provision of information satisfying the customer, and easiness in use and convenience of the information service is further improved for each customer.

## Claims

1. An information providing apparatus for providing information in response to a request from a customer, comprising:
a service fee information storage that stores service fee information concerning an information service fee to charge when providing the information;
a customer specifying information storage that stores customer specifying information for specifying the customer including customer identifying information for identifying the customer;
a map information acquiring section for acquiring map information;
a positional information acquiring section for acquiring current position information concerning a current position of the customer;
a customer identifying information acquiring section for acquiring customer identifying information of the customer;
a request information acquiring section for acquiring service request information for requesting provision of the information;
an authenticating section for authenticating the customer identifying information by verifying the acquired customer identifying information to the stored customer specifying information in response to the acquired service request information;
a customer-oriented information generating section that acquires travel-use information based on the acquired current position information and to be used when traveling from the current position, and generates customer-oriented information to be provided to the customer based on the acquired current position information, map information and the travel-use information in response to the acquired service request information; and
an information providing section for processing the generated customer-oriented information so that the information can be provided to the customer, while, based on the customer specifying information corresponding to the authenticated customer identifying information, processing a settlement of an information service fee based on the stored service fee information.

2. The information providing apparatus according to claim 1,
wherein the service request information includes a plurality of request level information respectively corresponding to request levels of the customer-oriented information,
wherein the service fee information indicates a plurality of information service fees preset corresponding to the plurality of request level information,
wherein when it is recognized that the request level based on the service request information is high, the customer-oriented information generating section generates a plurality of customer-oriented information based on the current position information, the map information, and the travel-use information, and
wherein the information providing section processes the generated plurality of customer-oriented information so that the information can be provided to the customer, while, based on the customer specifying information corresponding to the authenticated customer identifying information, processing a settlement of an information service fee based on the service fee information corresponding to the request level information.

3. The information providing apparatus according to claim 2,
wherein the information providing section processes the plurality of customer-oriented information so that the information can be provided to the customer in the comparable manner.

4. The information providing apparatus according to any one of claims 1 to 3,
wherein the positional information acquiring section acquires the current position information and also acquires destination information concerning a destination requested by the customer,
wherein the information providing apparatus further comprising a traveling route information computing section for computing traveling route information concerning a traveling route from the current position of the customer to the destination requested by the customer based on the map information acquired by the map information acquiring section and the current position information and the destination information acquired by the positional information acquiring section, and
wherein the customer-oriented information generating section acquires the traveling route information as the travel-use information in response to the service request information, and generates customer-oriented information to be provided to the customer based on the current position information, the map information, and the traveling route information.

5. The information providing apparatus according to any one of claims 1 to 3,
wherein the customer-oriented information generating section acquires traffic information concerning a traffic condition of a movable body associated with a specified position in the map information as the travel-use information in response to the service request information, and generates customer-oriented information to be provided to the customer based on the current position information, the map information, and the traffic information.

6. The information providing apparatus according to claim 5,
wherein the traffic information is traffic jam information indicating a traffic jam condition for the movable body.

7. The information providing apparatus according to claim 6,
wherein the traffic jam information includes traffic jam prediction information concerning change of the information from time to time computed based on statistic traffic information prepared by statistically processing traffic conditions in the past as a function of time.

8. The information providing apparatus according to any one of claims 5 to 7,
wherein the positional information acquiring section acquires the current position information and also acquires destination information concerning a destination requested by the customer,
wherein the information providing apparatus further comprising a traveling route information computing section for computing traveling route information concerning a traveling route from the current position of the customer to the destination requested by the customer based on the map information acquired by the map information acquiring section and the current position information and the destination information acquired by the positional information acquiring section, and
wherein the customer-oriented information generating section acquires the traffic information and the traveling route information as the travel-use information in response to the service request information, and generates customer-oriented information to be provided to the customer based on the current position information, the map information, the traffic information, and the traveling route information.

9. The information providing apparatus according to claim 8,
wherein the traveling route information computing section computes the traveling route information, and also computes traveling time information concerting a time required for traveling through the traveling route while taking the traveling route based on the traveling route information with reference to the traffic information into consideration, and
wherein the customer-oriented information generating section acquires the traffic information, the traveling route information, and the traveling time information as the travel-use information in response to the service request information, and generates customer-oriented information to be provided to the customer based on the current position information, the map information, the traffic information, the traveling route information, and the traveling time information.

10. The information providing apparatus according to claim 8 or 9,
wherein traveling route information computing section computes the traveling route information, and also computes traveling distance information concerning a traveling distance of a traveling route based on the traveling route information, and
wherein the customer-oriented information generating section acquires the traffic information, the traveling route information, and the traveling distance information as the travel-use information in response to the service request information, and generates customer-oriented information to be provided to the customer based on the current position information, the map information, the traffic information, the traveling route information, and the traveling distance information.

11. The information providing apparatus according to any one of claims 1 to 3,
wherein the customer-oriented information generating section acquires weather information associated with a specified position in the map information as the travel-use information in response to the service request information, and generates customer-oriented information to be provided to the customer based on the current position information, the map information, and the weather information.

12. The information providing apparatus according to any one of claims 1 to 11,
wherein the positional information acquiring section, the customer identifying information acquiring section, and the request information acquiring section acquire the customer identifying information, the current position information, and the service request information from a communication terminal unit owned by the customer and capable of transmitting and receiving information, and
wherein the information providing section transmits the customer-oriented information generated by the customer-oriented information generating section to the communication terminal unit so that the information can be provided to the customer.

13. The information providing apparatus according to claim 12,
wherein the customer identifying information is specific to the communication terminal unit,
wherein the communication terminal unit comprising a terminal storage for storing the customer identifying information; and
wherein the customer identifying information acquiring section acquires customer identifying information stored in the terminal storage of the communication terminal unit.

14. An information providing system comprising:
the information providing apparatus according to any on of claims 1 to 13;
a communication terminal unit owned by a customer and capable of transmitting and receiving information; and
a communication section interconnecting the information providing apparatus with the communication terminal unit so that information can be transmitted therebetween.

15. The information providing system according to claim 14,
wherein the communication section interconnects the information providing apparatus with the communication terminal unit via a network so that information can be transmitted therebetween.

16. An information providing method for providing information in response to a request from a customer, comprising the steps of:
acquiring map information, current position information concerning a current position of the customer, customer identifying information for the customer, and service request information requesting provision of the information;
authenticating the customer identifying information by verifying the acquired customer identifying information to customer specifying information for specifying the customer including the customer identifying information previously stored in response to the acquired service request information;
acquiring travel-use information to be used when traveling from the current position based on the acquired current position information to generate customer-oriented information to be provided to the customer based on the acquired current position information, map information, and travel-use information in response to the acquired service request information; and
processing the generated customer-oriented information so that the information can be provided to the customer while, based on the customer specifying information corresponding to the authenticated customer identifying information, processing a settlement of an information service fee based on previously stored service fee information concerning an information service fee to charge when providing the customer-oriented information.

17. An information providing program operable in a computer for performing the information providing method according to claim 16.

18. A recording medium storing the information providing program according to claim 17 in a manner readable by a computer.
